# EUROPEAN PATENT SPECIFICATION

(11) **EP 1 388 474 B1**
(45) Date of publication and mention of the grant of the patent: **29.06.2011**
(21) Application number: 03254821.6
(22) Date of filing: 31.07.2003
(51) Int. Cl.: B60T 8/1755, B60T 8/24, B60R 21/0132, B62D 6/00, B62D 7/15, B60G 17/016, B60G 17/0195

(54) **System for determining an amount of control for operating a rollover control system**
System zur Bestimmung einer Regelgrösse zum Betrieb eines Wankregelungssystems
Système pour déterminer une quantité de contrôle d'opération d'un système de contrôle anti-roulis

(30) Priority: 05.08.2002 US 401416 P; 05.08.2002 US 401464 P; 28.07.2003 US 628632; 28.07.2003 US 628685; 28.07.2003 US 628484
(43) Date of publication of application: 11.02.2004
(73) Proprietor: Ford Global Technologies, LLC, Dearborn, MI 48126 (US)
(72) Inventor: Salib, Albert Chenouda, Ypsilanti, MI 48198 (US); Ghani, Hani Abdul, Dearborn Heights, MI 48127 (US); Geurink, Mathijs Willem, 424 90 Olofstorp (SE); Brown, Todd Allen, Dearborn, MI 48128 (US)
(74) Representative: Messulam, Alec Moses

(56) References cited:
- EP-A- 1 046 571
- EP-A- 1 197 409
- EP-A- 1 234 741
- DE-A- 10 025 493
- DE-A- 10 065 010
- US-A- 5 560 688

## Description

### RELATED APPLICATIONS

The present invention claims priority to U.S. provisional applications 60/401,416 and 60/401,464 filed August 5, 2002, and is related to U.S. patent applications entitled "SYSTEM AND METHOD FOR DETERMINING AN AMOUNT OF CONTROL FOR OPERATING A ROLLOVER CONTROL SYSTEM" (Attorney Docket No. 202-1221/FGT-1691), "SYSTEM AND METHOD FOR OPERATING A ROLLOVER CONTROL SYSTEM IN A TRANSITION TO A ROLLOVER CONDITION" (Attorney Docket No. 203-0816/FGT-1869) and "SYSTEM AND METHOD FOR OPERATING A ROLLOVER CONTROL SYSTEM DURING AN ELEVATED CONDITION" (Attorney Docket No. 203-0903/FGT-1871).

### TECHNICAL FIELD

The present invention relates generally to a control apparatus for controlling a system of an automotive vehicle in response to sensed dynamic behavior, and more specifically, to a method and apparatus for adjusting the activation based on vehicle operating conditions.

### BACKGROUND

Dynamic control systems for automotive vehicles have recently begun to be offered on various products. Dynamic control systems typically control the yaw of the vehicle by controlling the braking effort at the various wheels of the vehicle. Yaw control systems typically compare the desired direction of the vehicle based upon the steering wheel angle and the direction of travel. By regulating the amount of braking at each corner of the vehicle, the desired direction of travel may be maintained. Typically, the dynamic control systems do not address rollover (wheels lifting) of the vehicle. For high profile vehicles in particular, it would be desirable to control the rollover characteristic of the vehicle to maintain the vehicle position with respect to the road. That is, it is desirable to maintain contact of each of the four tires of the vehicle on the road.

One example of a driving dynamics monitoring system which utilises, among other things, a yaw control system is disclosed in EP1197409. This document teaches utilising sensor technology to determine the grip potential between the wheels and the road with a computing procedure. The system considers longitudinal and transverse forces and teaches the use of wheel speed sensors, yaw rate sensors, transverse acceleration and the like. The document also discloses combining data from ABS and ASC systems.

In vehicle rollover control, it is desired to alter the vehicle attitude such that its motion along the roll direction is prevented from achieving a predetermined limit (rollover limit) with the aid of the actuation from the available active systems such as controllable brake system, steering system and suspension system. Although the vehicle attitude is well defined, direct measurement is usually impossible.

EP 1046571 teaches a method of reducing rollover risk by monitoring a coefficient of rollover and ensuring that the value does not exceed a threshold. Various computational techniques are suggested for calculating the rollover coefficient and the use of various sensor values, including those relating to wheel speed, tyre pressure, turning rate, acceleration, and rolling angle, is also taught. Once the threshold is reached, steps are taken to reduce the likelihood of the car rolling over.

During a potential vehicular rollover event, wheels on one side of the vehicle start lifting, and the roll center of the vehicle shifts to the contact patch of the remaining tires. This shifted roll center increases the roll moment of inertia of the vehicle, and hence reduces the roll acceleration of the vehicle. However, the roll attitude could still increase rapidly. The corresponding roll motion when the vehicle starts side lifting deviates from the roll motion during normal driving conditions

When the wheels start to lift from the pavement, it is desirable to confirm this condition. This allows the system to make an accurate determination as to the appropriate correction. If wheels are on the ground, or recontact the ground after a lift condition, this also assists with accurate control.

Some systems use position sensors to measure the relative distance between the vehicle body and the vehicle suspension. One drawback to such systems is that the distance from the body to the road must be inferred. This also increases the number of sensors on the vehicle. Other techniques use sensor signals to indirectly detect wheel lifting qualitatively.

One example of a wheel lifting determination can be found in Ford patent U.S. 6,356,188 and U.S. patent application (Attorney Docket 202-0433/FGT-1683 PA). The system applies a change in torque to the wheels to determine wheel lift. The output from such a wheel lifting determination unit can be used qualitatively. This method is an active determination since the basis of the system relies on changing the torque of the wheels by the application of brakes or the like. In some situations it may be desirable to determine wheel lift without changing the torque of a wheel.

Due to the inevitable dead spots due to the vehicle configuration, wheel lift detection methods may be not able to identify all the conditions where four wheels are absolutely grounded in a timely and accurate fashion. For example, if the torques applied to the wheels have errors, if the vehicle reference computation has errors or there is not enough excitation in the torque provided, the wheel lift detection may provide erroneous information or no information about the roll trending of the vehicle. Wheel lift information may also be safe-guarded by information regarding the vehicle roll angle information from the various sensors.

In certain driving conditions where the vehicle is moving with all four wheels contacting ground and the wheel lift detection does not detect the grounding condition, the roll information derived from the various sensors may be the sole information for identify vehicle roll trending. If in such driving cases, the vehicle experiences very large lateral acceleration and large roll rate, the grounded conditions might be replaced by erroneous lifting conditions. That is, those signals may predict that the vehicle is in a divergent roll event but the actual vehicle is not in a rolling event at all. Such cases include when the vehicle is driven on a mountain road, off-road or banked road, tire compression or an impact may cause a large normal load. The increased normal load causes a force component to be added to the lateral acceleration sensor output. Hence, a larger than 1 g lateral acceleration is obtained but the actual lateral acceleration of the vehicle projected along the road surface might be in 0.6 g range. An off-road driving condition may also be an off-camber driving condition. When a low speed vehicle is driven on an off-camber road with some hard tire compression or impact, the control system may be fooled to activate un-necessarily.

In order to reduce false activations, it would therefore be desirable to provide a rollover detection system that sensitizes and desensitizes the roll control determination.

DE 10065010 teaches a method of stabilising a vehicle by comparing setpoint values with actual measured values and influencing the actual values based on the results. A result of the method is to regulate vehicle dynamics and monitor the roll state of the vehicle. A preferred embodiment of the method uses roll angle as a measured value.

DE 10025493 teaches a method of co-ordinating output signals from multiple driving system devices. A result control signal is generated from the output signals which is then used to alter the driving state of the vehicle. Sensors used in the devices include radar sensors, longitudinal velocity sensors, tyre pressure sensors and the like.

US 2002/ 0059023 discloses a rolling control apparatus comprising a feed-forward control and a feed-back control for controlling the roll angle to a target roll angle.

### SUMMARY

The present invention improves the operation of a rollover stability control system (RSC) by controlling the safety device to provide improved performance. One way in which the improvement may be implemented is by controlling or improving the brake pressure prediction to improve the feel and performance time of the system.

In one embodiment, a system for controlling a safety system of an automotive vehicle has a first controller generating a first pressure control signal in response to a roll rate signal, a second controller generating a second pressure control signal in response to a roll angle signal and an arbitration module coupled to the first controller and the second controller. The arbitration module chooses the higher of the first pressure control signal and the second pressure control signal to determine a final pressure control signal. The safety system is coupled to the arbitration module. The safety system is operated in response to the final pressure control signal.

One advantage of the invention is that some or all of the ways in which to improve the system set forth herein may be used alone or simultaneously to improve the rollover control system.

Other advantages and features of the present invention will become apparent when viewed in light of the detailed description of the preferred embodiment when taken in conjunction with the attached drawings and appended claims.

### BRIEF DESCRIPTION OF THE DRAWINGS

Figure 1 is a diagrammatic view of a vehicle with variable vectors and coordinator frames.

Figure 2 is an end view of an automotive vehicle on a bank with definitions of various angles including global roll angle, relative roll angle, wheel departure angle (WDA), road bank angle and body-to-road angle.

Figure 3A is an end view of an on-camber divergent vehicle tendency.

Figure 3B is an end view of an automotive vehicle in an off-camber divergent condition.

Figure 3C is an end view of a vehicle in an on-camber convergent condition.

Figure 3D is an end view of a vehicle in an off-camber convergent condition.

Figure 4A is a block diagram of a stability control system.

Figure 4B is a block diagram of the controller 26 used in the stability control system depicted in Figure 4A.

Figure 5 is a block diagrammatic view of the unit 27 depicted in Figure 4B, which is used for quantitatively and qualitatively determining rollover trend of a vehicle.

Figure 6 is a detailed block diagram of a transition controller of the present embodiment.

Figure 7 is flow chart of the operation of one embodiment of the transition controller.

Figure 8 is a detailed block diagram of a PID controller of the present embodiment.

Figure 9 is flow chart of the operation of one embodiment of the PID controller.

Figure 10 is plot of a proportional peak hold strategy.

### DETAILED DESCRIPTION

In the following figures the same reference numerals will be used to identify the same components.

The present teachings may be used in conjunction with a yaw control system or a rollover control system for an automotive vehicle. However, the present teachings may also be used with a deployment device such as airbag or roll bar.

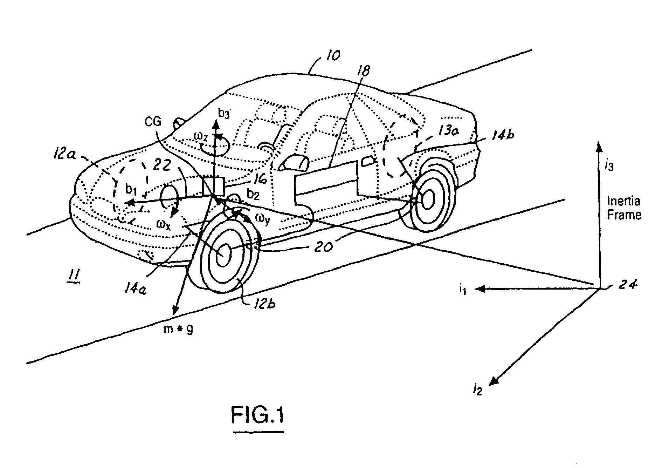

Referring to Figure 1, an automotive vehicle 10 on a road surface 11 with a safety system is illustrated with the various forces and moments thereon. Vehicle 10 has front right and front left tires 12a and 12b and rear right tires and rear left tires 13a and 13b, respectively. The vehicle 10 may also have a number of different types of front steering systems 14a and rear steering systems 14b including having each of the front and rear wheels configured with a respective controllable actuator, the front and rear wheels having a conventional type system in which both of the front wheels are controlled together and both of the rear wheels are controlled together, a system having conventional front steering and independently controllable rear steering for each of the wheels, or vice versa. Generally, the vehicle has a weight represented as *Mg* at the center of gravity of the vehicle, where *g* = 9.8 *m*/*s²* and *M* is the total mass of the vehicle.

As mentioned above, the system may also be used with active/semi-active suspension systems, anti-roll bar or other safety devices deployed or activated upon sensing predetermined dynamic conditions of the vehicle.

The sensing system 16 is part of a control system 18. The sensing system 16 may use a standard yaw stability control sensor set (including lateral acceleration sensor, yaw rate sensor, steering angle sensor and wheel speed sensor) together with a roll rate sensor and a longitudinal acceleration sensor. The various sensors will be further described below. The wheel speed sensors 20 are mounted at each corner of the vehicle, and the rest of the sensors of sensing system 16 may be mounted directly on the center of gravity of the vehicle body, along the directions *x,y* and *z* shown in Figure 1. As those skilled in the art will recognize, the frame from *b*₁, *b*₂ and *b*₃ is called a body frame 22, whose origin is located at the center of gravity of the car body, with the *b*₁ corresponding to the *x* axis pointing forward, *b*₂ corresponding to the *y* axis pointing off the driving side (to the left), and the *b*₃ corresponding to the *z* axis pointing upward. The angular rates of the car body are denoted about their respective axes as ω*ₓ* for the roll rate, ω*_{y}* for the pitch rate and ω*_{z}* for the yaw rate. The calculations set forth herein may take place in an inertial frame 24 that may be derived from the body frame 22 as described below.

The angular rate sensors and the acceleration sensors are mounted on the vehicle car body along the body frame directions *b*₁, *b*₂ and *b*₃, which are the *x*-*y*-*z* axes of the vehicle's sprung mass.

The longitudinal acceleration sensor 36 is mounted on the car body located at the center of gravity, with its sensing direction along *b*₁-axis, whose output is denoted as *aₓ.* The lateral acceleration sensor 32 is mounted on the car body located at the center of gravity, with its sensing direction along *b*₂ - axis, whose output is denoted as *a_{y}*.

The other frame used in the following discussion includes the road frame, as depicted in Figure 1. The road frame system *r*₁*r*₂*r*₃ is fixed on the driven road surface, where the *r*₃ axis is along the average road normal direction computed from the normal directions of the four-tire/road contact patches.

In the following discussion, the Euler angles of the body frame *b*₁*b*₂*b*₃ with respect to the road frame *r*₁*r*₂*r*₃ are denoted as θ*ₓᵣ*, θ*_{yr}* and θ*_{zr}*, which are also called the relative Euler angles.

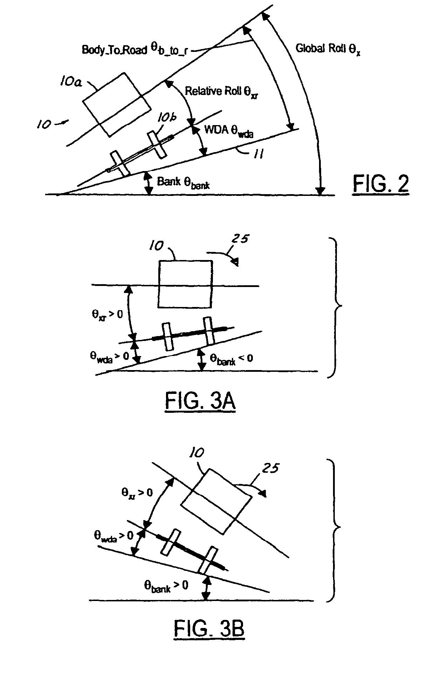

Referring now to Figure 2, the relationship of the various angles of the vehicle 10 relative to the road surface 11 is illustrated. One angle is a wheel departure angle θ*_{wda}*, which is the angle from the axle or the wheel axis to the road surface 11. Also shown is a reference road bank angle θ*_{bank}*, which is shown relative to the vehicle 10 on a road surface. The vehicle 10 has a vehicle body 10a and vehicle suspension 10b. The relative roll angle θ*ₓᵣ* is the angle between the wheel axle and the body 10a. The global roll angle θ*ₓ* is the angle between the horizontal plane (e.g., at sea level) and the vehicle body 10a.

Referring now to Figure 3A, vehicle 10 is illustrated in an on-camber divergent state. The on-camber divergent state refers to the vehicle having a greater than zero wheel departure angle, a greater than zero relative roll angle, and a moment represented by arrow 25 tending to increase the relative roll angle and the wheel departure angle. In this example, the bank angle is less than zero.

In Figure 3B, when the bank angle is greater than zero, the wheel departure angle is greater than zero, the relative roll angle is greater than zero and the moment is also to the right or increasing the relative roll angle and the wheel departure angle, the vehicle is in an off-camber divergent state.

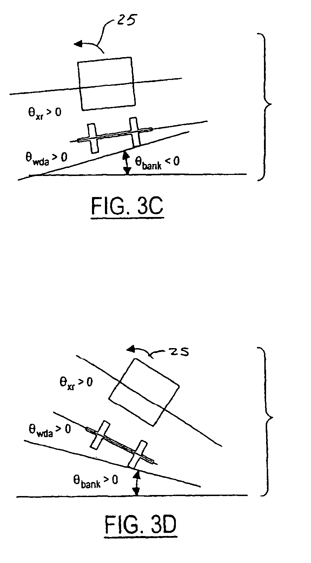

Referring now to Figure 3C, a bank angle of less than zero, a wheel departure angle greater than zero, and a relative roll angle greater than zero is shown with a roll moment 25 acting to the left. Thus, the vehicle is in an on-camber convergent state. That is, the convergent state refers to the vehicle tending towards not overturning.

Referring now to Figure 3D, when the bank angle is greater than 0, the wheel departure angle is greater than zero, and the relative roll angle is greater than zero and the roll moment is tending to the left, the vehicle is in an off-camber convergent state. That is, the vehicle is tending toward not rolling over.

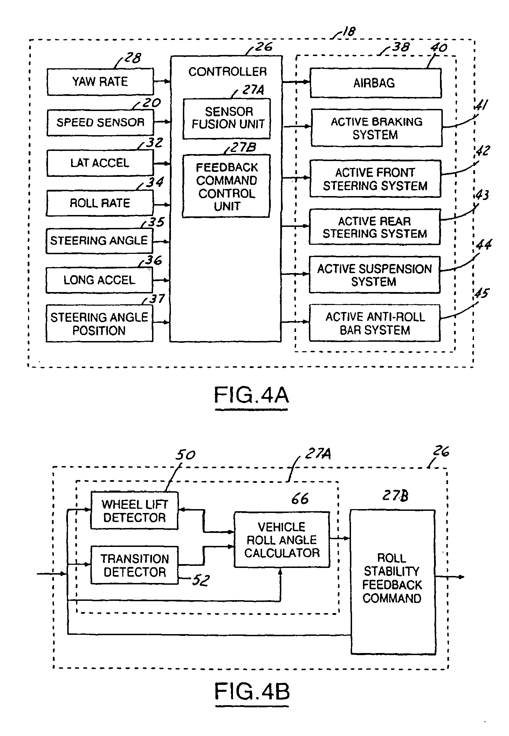

Referring now to Figure 4A, one embodiment of a roll stability control system 18 is illustrated in further detail having a controller 26 used for receiving information from a number of sensors which may include a yaw rate sensor 28, a speed sensor 20, a lateral acceleration sensor 32, a roll rate sensor 34, a steering angle sensor (hand wheel position) 35, a longitudinal acceleration sensor 36, and steering angle position sensor 37.

In one embodiment, the sensors are located at the center of gravity of the vehicle. Those skilled in the art will recognize that the sensors may also be located off the center of gravity and translated equivalently thereto.

Lateral acceleration, roll orientation and speed may be obtained using a global positioning system (GPS). Based upon inputs from the sensors, controller 26 may control a safety device 38. Depending on the desired sensitivity of the system and various other factors, not all the sensors 20, 28, 32, 34, 35, 36, and 37, or various combinations of the sensors, may be used in a commercial embodiment. Safety device 38 may control an airbag 40, an active braking system 41, an active front steering system 42, an active rear steering system 43, an active suspension system 44, and an active anti-roll bar system 45, or combinations thereof. Each of the systems 40-45 may have their own controllers for activating each one. As mentioned above, the safety system 38 may be at least the active braking system 41.

Roll rate sensor 34 may sense the roll condition of the vehicle based on sensing the height of one or more points on the vehicle relative to the road surface. Sensors that may be used to achieve this include a radar-based proximity sensor, a laser-based proximity sensor and a sonar-based proximity sensor.

Roll rate sensor 34 may also sense the roll condition based on sensing the linear or rotational relative displacement or displacement velocity of one or more of the suspension chassis components which may include a linear height or travel sensor, a rotary height or travel sensor, a wheel speed sensor used to look for a change in velocity, a steering wheel position sensor, a steering wheel velocity sensor and a driver heading command input from an electronic component that may include steer by wire using a hand wheel or joy stick.

The roll condition may also be sensed by sensing the force or torque associated with the loading condition of one or more suspension or chassis components including a pressure transducer in active air suspension, a shock absorber sensor such as a load cell, a strain gauge, the steering system absolute or relative motor load, the steering system pressure of the hydraulic lines, a tire lateral force sensor or sensors, a longitudinal tire force sensor, a vertical tire force sensor or a tire sidewall torsion sensor.

The roll condition of the vehicle may also be established by one or more of the following translational or rotational positions, velocities or accelerations of the vehicle including a roll gyro, the roll rate sensor 34, the yaw rate sensor 28, the lateral acceleration sensor 32, a vertical acceleration sensor, a vehicle longitudinal acceleration sensor, lateral or vertical speed sensor including a wheel-based speed sensor, a radar-based speed sensor, a sonar-based speed sensor, a laser-based speed sensor or an optical-based speed sensor.

Based on the inputs from sensors 20, 28, 32, 34, 35, 36, 37, controller 26 determines a roll condition and controls any one or more of the safety devices 40-45.

Speed sensor 20 may be one of a variety of speed sensors known to those skilled in the art. For example, a suitable speed sensor 20 may include a sensor at every wheel that is averaged by controller 26. The controller 26 translates the wheel speeds into the speed of the vehicle. Yaw rate, steering angle, wheel speed and possibly a slip angle estimate at each wheel may be translated back to the speed of the vehicle at the center of gravity. Various other algorithms are known to those skilled in the art. For example, if speed is determined while speeding up or braking around a corner, the lowest or highest wheel speed may not be used because of its error. Also, a transmission sensor may be used to determine vehicle speed.

Referring now to Figures 4A and 4B, controller 26 is illustrated in further detail. There are two major functions in controller 26: the rollover trend determination, which is called a sensor fusion unit 27A, and the feedback control command unit 27B. The sensor fusion unit 27A can be further decomposed as a wheel lift detector 50, a transition detector 52 and a vehicle roll angle calculator 66.

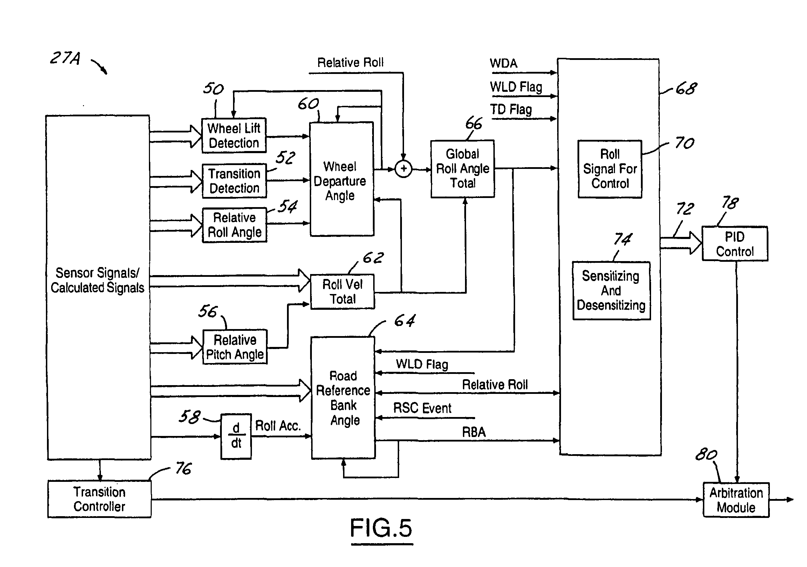

Referring now to Figure 5, the sensor fusion unit 27A is illustrated in further detail. The sensor fusion unit 27A receives the various sensor signals, 20, 28, 32, 34, 35, 36, 37 and integrates all the sensor signals with the calculated signals to generate signals suitable for roll stability control algorithms. From the various sensor signals wheel lift detection may be determined by the wheel lift detector 50. Wheel lift detector 50 includes both active wheel lift detection and active wheel lift detection, and wheel grounding condition detection. Wheel lift detector is described in co-pending U.S. provisional application serial number 60/400,375 (Attorney Docket 202-0433/FGT-1683PRV) filed August 1, 2002, and U.S. patent application (Attorney Docket 202-0433/FGT-1683PA). The modules described below may be implemented in hardware or software in a general purpose computer (microprocessor). From the wheel lift detection module 50, a determination of whether each wheel is absolutely grounded, possibly grounded, possibly lifted, or absolutely lifted may be determined. Transition detection module 52 is used to detect whether the vehicle is experiencing aggressive maneuver due to sudden steering wheel inputs from the driver. The sensors may also be used to determine a relative roll angle in relative roll angle module 54. Relative roll angle may be determined in many ways. One way is to use the roll acceleration module 58 in conjunction with the lateral acceleration sensor. As described above, the relative roll angle may be determined from the roll conditions described above.

The various sensor signals may also be used to determine a relative pitch angle in relative pitch angle module 56 and a roll acceleration in roll acceleration module 58. The outputs of the wheel lift detection module 50, the transition detection module 52, and the relative roll angle module 54 are used to determine a wheel departure angle in wheel departure angle module 60. Various sensor signals and the relative pitch angle in relative pitch angle module 56 are used to determine a relative velocity total in module 62. The road reference bank angle block 64 determines the bank angle. The relative pitch angle, the roll acceleration, and various other sensor signals as described below are used to determine the road reference bank angle. Other inputs may include a roll stability control event (RSC) and/or the presence of a recent yaw stability control event, and the wheel lifting and/or grounding flags.

The global roll angle of the vehicle is determined in global roll angle module 66. The relative roll angle, the wheel departure angle, and the roll velocity total blocks are all inputs to the global roll angle total module 66. The global roll angle total block determines the global roll angle θ*ₓ.* An output module 68 receives the global roll angle total module 66 and the road reference bank angle from the road reference bank angle module 64. A roll signal for control is developed in roll signal module 70. The roll signal for control is illustrated as arrow 72. A sensitizing and desensitizing module 74 may also be included in the output module 68 to adjust the roll signal for control.

In the reference road bank angle module 64, the reference bank angle estimate is calculated. The objective of the reference bank estimate is to track a robust but rough indication of the road bank angle experienced during driving in both stable and highly dynamic situations, and which is in favor for roll stability control. That is, this reference bank angle is adjusted based on the vehicle driving condition and the vehicle roll condition. Most importantly, when compared to the global roll estimate, it is intended to capture the occurrence and physical magnitude of a divergent roll condition (two wheel lift) should it occur. This signal is intended to be used as a comparator against the global roll estimate for calculating the error signal which is fed back to roll stability controller 26.

In parallel with the above a transition controller 76 may implemented as will be further described below. The roll signal for control 72 may be used as an input to a proportional-integral-derivative controller 78. The terminology for the PID controller 78 refers to its functions. However, the function of double derivative may be added and a function such as integral may be used. For clarity the PID controller will be used for the controller even if all of the function proportional, integral or derivative functions are not used or if the double derivative is used. In parallel to the process above, a transitional controller may also be used. The transitional controller 78. One embodiment for example includes just the proportional and derivative functions.

The outputs of controller 76 and the controller 78 are provided to an arbitration module 80, which ultimately controls the safety system. In the present example, the safety system is a hydraulic safety system such as a rollover control system using brakes. The arbitration module 80 may, for example, simply choose the highest brake pressure requested from the transition controller and the PID controller.

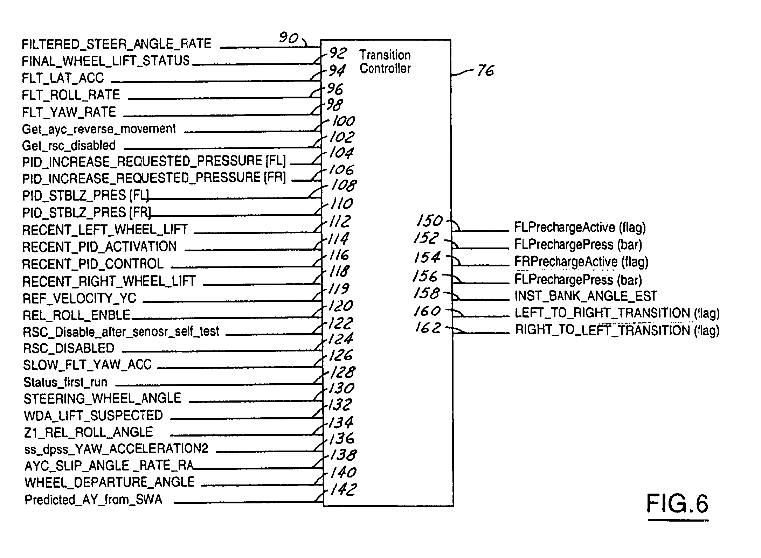

Referring now to Figure 6, the operation of the transition controller 76 is described in further detail. In this module, RSC control for the transitional portion of a dynamic maneuver is performed. The transitional portion is the region in which the outputs of the sensors are still linear. That is, none are saturated. As briefly described below, the transition controller may perform all or some of the following.

Caliper pre-charge functionality. During control interventions requiring maximum pressure build rates, significant delays in pressure builds occur due to the relatively large volume of fluid required to establish caliper pressure in the lower pressure range. The higher volume consumption is due to the air gap between the rotor and linings, as well as the high effective compliance of the brake system at low pressures. The transition controller 76 includes precharging functionality to mitigate initial delays in establishing caliper pressure by applying low levels of pressure when steering activity suggests an RSC event is eminent.

Yaw Damping. The under-damped nature of the yaw dynamics of the vehicle can result in yaw rate overshoot in transitional maneuvers. Excessive yaw rate overshoot in limit maneuvers results in excessive side-slip angles which can result in lateral forces that significantly exceed the steady state cornering capacity of the vehicle and can significantly reduce the roll stability margin of the vehicle. As a preventative measure, yaw damping may be provided to minimize the occurrence of excessive lateral forces and vehicle side-slip angles that might expose the vehicle to excessive lateral forces and tripping mechanisms. The phase of the brake interventions resulting from this module introduces significant yaw damping during aggressive maneuvers. A goal is to provide as much yaw damping as possible without inhibiting the responsiveness of the vehicle or becoming intrusive.

Roll Damping. For sufficiently aggressive transitional maneuvers, the roll momentum can result in a lifting of the center of gravity of the vehicle at the end of the transition and may result in excessive wheel lift. It is an objective of this module to introduce effective roll damping before the occurrence of wheel lift by rounding off the build up lateral force when needed as they approach their peak levels in the final phase of the transition.

Pressure Build Prediction. In addition to the caliper pre-charge functionality, pressure build prediction and actuator delay compensation have been introduced in this module. Limitations in pressure build rates are compensated for by projecting forward when a pre-determined pressure level is likely to be requested, based on the relative roll angle, roll rate, roll acceleration, and estimated caliper pressure. Pressure is built during the transition so that the desired peak pressure can be achieved when it is needed to reduce the effects of limited pressure build rates.

Feed forward control. In this module, steering information, front side-slip angle information and relative roll information is used to achieve a feed forward component of control from the point of view of the PID controller 78. Feed forward information is used to build significant pressure where needed to reduce the demands on the PID controller 78 for a given RSC event and to extend the functional envelop of the RSC system. For mild and moderate events, stability performance is achieved with lower levels of PID intervention. In conjunction with feed-forward control, PID control is able to handle more extreme maneuvers than would be possible without feed-forward control for two primary reasons. First, by the time the PID controller 78 has requested intervention, the vehicle will be in a more stable condition due to the feed forward control. Second, when the PID controller 78 does request pressure, significant pressure will already exist in the caliper, allowing the PID controller to achieve the required pressure much more quickly.

Gradient Control. Proportional plus Derivative control is implemented for roll angle and front linear side slip angle in the PID controller 78. For the PID controller 78, relative roll is used for the proportional term, and roll velocity is used for the derivative term. Because relative roll is used, this controller is robust to integration errors that might occur in the total roll estimate. As a result, it is possible to make the transition controller 76 more sensitive than the PID controller without the adverse consequences of integrator drift in the state estimates.

Establish initial conditions for PID controller 78. Because this module is designed to lead the PID control intervention in a given maneuver, PID control can be initiated at significantly higher pressure, requiring less error to achieve the critical pressure required to stabilize the vehicle.

Progressive Pressure Build. The transition controller 76 builds and decreases pressure with a minimum amount of jerk. This supports smooth transparent interventions and reduces the potential for exciting pitch dynamics in the vehicle.

Transparency. The transition controller 76 may also builds pressure in parallel with the transition in lateral acceleration. Because the longitudinal acceleration is building at the same time as the reversal in lateral acceleration, the pitch motion is more in phase with the roll motion, resulting in a coherent body motion. Additionally, because the build up of longitudinal acceleration is much smaller than the change in lateral acceleration, the brake intervention becomes overshadowed by the lateral jerk.

Referring now to Figure 6, the transition controller 76 includes the following inputs:
a filtered steering angle rate (FILTERED_STEER_ANGLE_RATE) input 90, a final wheel lift status (FINAL_WHEEL_LIFT_STATUS) 92, a filtered lateral acceleration (FLT_LAT_ACC) input 94, a filtered roll rate (FLT_ROLL_RATE) input 96, a filtered yaw rate (FLT_YAW_RATE) signal 98, a Get_ayc_reverse_movement input 100, a Get_rsc_disabled input 102, a PID_INCREASE_REQUESTED_PRESSURE[FL] input 104, a PID_INCREASE_REQUESTED_PRESSURE[FR] input 106, a PID_STBLZ_PRES[FL] input 108, a PID_STBLZ_PRES[FR] input 110, a RECENT_LEFT_WHEEL_LIFT input 112, a RECENT_PID_ACTIVATION input 114, a RECENT_PID_CONTROL input 116, a RECENT_RIGHT_WHEEL_LIFT input 118, a REF_VELOCITY_YC input 119, a REL_ROLL_ANGLE input 120, a RSC_Disable_after_sensor_self_test input 122, an RSC_DISABLED input 124, a SLOM_FLT_YAM_ACC input 126, a Status_first_run input 128, a STEERING_WHEEL_ANGLE input 130, a WDA_LIFT_SUSPECTED input 132, Z1_REL_ROLL_ANGLE input 134, a ss_dpss_YAW_ACCELERATION2 input 136, a AYC_SLIP_ANGLE_RATE_RA input 138, a WHEEL_DEPARTURE_ANGLE input 140, and a Predicted_AY_from_SWA input 144.

The transition controller 76 has the following outputs FLPrechargeActive (flag) output 150, a FLPrechargePress (bar) output 152, a FRPrechargeActive (flag) output 154, a FRPrechargePress (bar) output 156, an INST_BANK_ANGLE_EST output 158, a LEFT_TO_RIGHT_TRANSITION (flag) output 160, and a RIGHT_TO_LEFT_TRANSITION (flag) output 162.

The transition controller 76 also has predefined calibratable parameter that have the following definitions:
scale_LNR_REAR_LATA_FILTER: In the present example a value of 1024.0 unitless was used.
value_LNR_REAR_LATA_LOW_PASS_FILTER_FREQ: In the present example a value of 10.0 Hz was used.
p_ALPHA_LNR_REAR_LATA_FILTER_COEFF: (LOOP_TIME* value_LNR_REAR_LATA_LOW_PASS_FILTER_FREQ* scale_LNR_REAR_LATA_FILTER )
p_BETA_LNR_REAR_LATA_FILTER_COEFF:((1.0-(LOOP_TIME* value_LNR_REAR_LATA_LOW_PASS_FILTER_FREQ))* scale_LNR_REAR_LATA_FILTER )
BASE_MATCHING_PRESSURE: In the present example a value of -177.0 bar was used. The matching pressure for the precharge prediction at a mu level of zero.
MATCHING_PRESSURE_MU_GAIN: In the present example a value of 3000 bar/g was used. The gain with which the matching pressure is increased as mu is increased.
EXPECTED SWA_LEAD_TIME_MU_GAIN: The gain for determining how far in advance the predicted steering wheel angle sign crossing will cause a positive or negative SWA expected flag. In the following example, values 0.4- 0.5 sec/g were used.
SpeedDpndntAyChng (linear interpolation function of vehicle speed): The speed dependent threshold for determining if the driver is requesting a rapid change in lateral acceleration. The following table illustrates the numbers used in the present example.

| V(mps) | SpeedDpndntAyChng (mps2/sec) |
|---|---|
| 0 | 33 |
| 17.9 | 33 |
| 22.4 | 30 |
| 26.79 | 25 |
| 31.3 | 16 |
| 83 | 11 |

RECENT_RAPID_AY_TIME: In the present example a value of 150 loops was used. The time in loops for which the recent rapid ay flag is held high after the rate of change of the lateral acceleration requested by the driver exceeds the threshold.
LARGE_ROUGH_MU: In the present example a value of 0.7 g's was used. Large rough mu threshold for determining significant dynamics.
RECENT_LARGE_ROUGH_MU_TIME: In the present example a value of 150 loops was used. The time in loops for which the recent large rough mu flag is held high after the rough mu estimate exceeds a predetermined threshold.
KP_REL_ROLL: In the present example a value of 8.0 bar/deg was used. Proportional pressure gain for relative roll feedback.
KD_REL_ROLL: In the present example a value of 2.0 bar/deg/s was used. Derivative pressure gain for relative roll feedback.
REL_ROLL_DB: In the present example a value of 5.4 deg was used. Deadband for proportional feedback on relative roll.
REL_ROLL_PD_PRESS_FILT: In the present example a value of 1.0/5.0 unitless was used. Filter coefficient used in filtering the relative roll Proportional plus derivative feedback requested pressure.
KP_SS_LIN_FRONT: In the present example a value of 10.0 bar/deg was used. Proportional pressure gain for front linear side slip angle feedback.
KD_SS_LIN_FRONT: In the present example a value of 2.5 bar/deg/s was used. Derivative pressure gain for front linear side slip angle feedback.
FT_CRNRG_CMPLNCE Front cornering compliance: In the present example, values between 6 and 8.18 deg/g were used.
RR_CRNRG_CMPLNCE Rear cornering compliance: In the present example, values between 3 and 5 deg/g were used.
SS_LIN_FRONT_DB: In the present example a value of 8.2 deg/g was used. Deadband for proportional feedback on front linear side slip angle feedback.
SS_LIN_PD_PRESS_FILT: In the present example a value of 1.0/16.0 unitless was used. Filter coefficient used in filtering the front linear side slip angle proportional plus derivative feedback requested pressure.
MAX_PRECHARGE_TIME: In the present example a value of 70 loops was used. Time in loops after which under certain conditions, the precharge pressure is forced down at the maximum rate.
PRECHARGE_BUILD_TIME: In the present example a value of 20 loops was used. Time in loops before which under certain conditions, the precharge pressure is ramped down at the target build rate.
TARGET_BUILD_RATE: In the present example a value of 100.0 bar/sec was used. The target build rate for the precharge strategy while in prediction mode.
LARGE_DYNAMICS_BUILD_RATE: In the present example a value of 250.0 bar/sec was used. The pressure build rate for the precharge strategy when either the relative roll or front linear side slip angle PD pressures exceed the current precharge pressure on a given corner of the vehicle.
VELOCITY_MIN_10: In the present example a value of 10.0 mps was used. Minimum velocity below which the precharge strategy will not be enabled.
ROUGH_MU_HOLD_TIME: In the present example a value of 150 counts was used. The time in loops for which the rough mu estimate will be held high after an increase in value.
ROUGH_MU_RAMP_DOWN_RATE: In the present example a value of 0.2g's/sec was used. The rate at which the rough mu estimate will be ramped down after the rough mu hold time is exceeded.
BASE_PRESSURE_MU_GAIN: In the present example a value of 15.0 bar/g was used. The gain for determining the precharge pressure from rough mu, due to rapid steering input.
RATE_LIMIT_dAY_FROM_SWA: In the present example, values between 70 mps2/s/s; and 140 mps2/s/s were used. The rate limit for the decrease in value of the rate limited signal representing the rate of change of lateral acceleration being requested by the driver.
MIN_FL_REL_ROLL_PD_PRESS: In the present example a value of -320 bar was used. Lower bound for relative roll proportional/derivative pressure. MAX_FL_REL_ROLL_PD_PRESS: In the present example a value of -320 bar was used. Upper bound for relative roll proportional/derivative pressure.
FAST_PRESS_REDUCTION_RATE: In the present example a value of 200 bar/s was used. The fast pressure reduction rate for the precharge strategy while in prediction mode.
AVG_Steering_Ratio: In the present example a value of 16 deg/deg was used. The ratio of steering to wheel.
Rel_Roll_Vel_FLT_Coeff: In the present example a value of (16) 1/16^{th} filter coefficient was used in filtering relative roll velocity.
MIN_REF_VELOCITY_YC: In the present example a value of 0.01 kph was used to prevent divide by 0 when the reference velocity is too small.
lin_frnt_vel_filter_coeff: In the present example a value of (16.0) 1/16^{th} filter coefficient was used in filtering linear front velocity.
max_RoughMU: In the present example a value of 1.0 was used. Upper bound for Rough MU upper and lower
min_RoughMU: In the present example a value of 0.1 was used. Lower bound for Rough MU upper and lower
MAX_THRESHOLD_FOR_PREDICTED_POS_SWA: In the present example a value of -90 degrees was used. SWA threshold for predicting crossover to the left.
MIN_THRESHOLD_FOR_PREDICTED_POS_SWA: In the present example a value of 90 degrees was used. SWA threshold for predicting crossover to the right.
MIN_POS_SWA_THRESHOLD: In the present example a value of 0.1 degree was used. The SWA threshold for predicting crossover to the left.
MAX_POS_SWA_THRESHOLD: In the present example a value of -0.1 degree was used. The SWA threshold for predicting crossover to the right.
FRNT_SLIP_ANGLE_THRESHOLD_POS_SIG_DYN: In the present example a value of 0.4 Force threshold was used in setting Significant_Dynamics flag.
VELOCITY_MIN_TO_EXIT_7: In the present example a value of 7.0 m/s was used. Lower bound on longitudinal velocity for setting ENABLE_RSC_PRECHARGE flag.
MIN_SLIP_ANGLE_FOR_PRCHG_ACT: In the present example a value of 0.1 degrees was used. Minimum slip angle for precharge_active flags.
TRANSITION_AY_THRESHOLD: In the present example a value of 0.5 G's was used. Lateral acceleration threshold to initiate moderate ay counters.
TRANSITION_HOLD_TIME: In the present example a value of 100 loops was used. Initial value for moderate ay counters.
VHCL_MASS: In the present example a value of 3033.0 kg was used. Vehicle mass.
CG_TO_RR_AXLE: In the present example a value of 1.471 m was used. Distance from vehicle center of gravity to rear axle.
CG_TO_FRT_AXLE: In the present example a value of 1.546 m was used. Distance from vehicle center of gravity to front axle.
AY_SNSR_TO_RR_AXLE: In the present example a value of -1.791 m was used. Distance from ay sensor to rear axle.
WHEEL_BASE (CG_TO_FRT_AXLE + CG_TO_RR_AXLE)
AY_TO_CG (CG_TO_RR_AXLE + AY_SNSR_TO_RR_AXLE)
YAW_MMT_INERTIA: In the present example a value of 6303.5 kg-m/s^2 was used. Moment of inertia about the Z axis.
G_TO_MPS2: In the present example a value of 9.81 m/s^2/G was used. Convert from G's to m/s^2. value_MAX_ANGLE (45.0 degrees): Upper limit for the estimate of the instantaneous bank angle
MAX_ANGLE (value_MAX_ANGLE/deg_RES_ROLL_ANGLE)
ss_RES_dAYFromSWA: In the present example a value of 0.004375 was used. Scaling for dAYFromSWA.
MIN_dAY_FROM_SWA: In the present example a value of -100.00/ss_RES_dAYFromSWA was used. Lower limit for dAYFromSWA.
MAX_dAY_FROM_SWA: In the present example a value of 100.00/ss_RES_dAYFromSWA was used. Upper limit for dAYFromSWA.
LARGE_SWA_RATE_THRESH: In the present example a value of 700 deg/s was used. Threshold to reset recent large swa rate timers.
RECENT_WHEEL_LIFT_TIME: In the present example a value of 1/looptime was used. Initial value for recent wheel lift timers.
rpss_RES_YAW_ACC (dpss_RES_YAM_ACC *pc_DEG_TO_RAD): Scaling for yaw acceleration in radians.
MIN_dAY_FROM_YAW_ACC: In the present example a value of -100.0/ss_RES_dAYFromSWA was used. Lower limit for ssDAyFromYawAcc.
MAX_dAY_FROM_YAW_ACC: In the present example a value of 100.00/ss_RES_dAYFromSWA was used. Upper limit for ssDAyFromYawAcc.
p_dpg_RR_CRNRG_CMPLNCE: In the present example a value of 4.68 deg/g U228 was used. Rear cornering compliance.
dps_RES_BETA_PRIME(rps_RES_YAW_RATE*pc_RAD_TO_DEG): Scaling for ssDAyFromBetaPRA.
MIN_dAY_FROM_BETAPRA: In the present example a value of -190.0/ss_RES_dAYFromSWA was used. Lower limit for ssDAyFromBetaPRA.
MAX_dAY_FROM_BETAPRA: In the present example a value of 140.0/ss_RES_dAYFromSWA was used. Upper limit for ssDAyFromBetaPRA.
YawAcc2SWARate_x_tab: In the present example a value of {0, 30, 50, 70, 203} MPH was used. X interpolation table for ssYawAcc2SWARateFraction.
YawAcc2SWARate_y_tab: In the present example a value of {0.66, 0.66, 0.60, 0.50, 0.50} fraction was used. Y interpolation table for ssYawAcc2SWARateFraction.
YawAcc2SWARate_len: In the present example a value of 5 unitless was used. The number of entries in the interpolation tables for ssYawAcc2SWARateFraction.
BetaDotRA2SWARate_x_tab: In the present example a value of {0, 30, 50, 203} MPH was used. X interpolation table for ssBetaDotRA2SWARateFraction.
BetaDotRA2SWARate_y_tab: In the present example a value of {0.35, 0.35, 0.50, 0.50} fraction was used. Y interpolation table for ssBetaDotRA2SWARateFraction.
BetaDotRA2SWARate_len: In the present example a value of 4 unitless was used. The number of entries in the interpolation tables for ssBetaDotRA2SWARateFraction.
Build_rate_x_tab: In the present example a value of {0, 30, 50, max} mps2/sec was used. X lookup table for build rate.
Build_rate_y_tab: In the present example a value of {100, 100, 250, 250} bar/sec was used. Y lookup table for build rate.
Build_rate_tab_len: In the present example a value of 4 unitless was used. Length of build rate lookup tables for interpolation.
FRNT_SLIP_ANGLE_THRESHOLD_POS_SIG_DYN: In the present example a value of 0.4 G was used. Threshold for Front linear slip angle.
MIN_MATCH_PRESS_2_PD_PRESS_DELTA: In the present example a value of 1.0 bar was used. Lower limit on PDRelRollMatchPressDelta.
MIN_INST_BUILD_RATE: In the present example a value of 100.0 bar was used. Minimum for InstRelRollBuildRate.
MAX_INST_BUILD_RATE: In the present example a value of 300.0 bar was used. Maximum for InstRelRollBuildRate.
TARGET_DUMP_RATE: In the present example a value of 150 bar/s was used. Rate for reducing pressure.
UPPER_BOUND_ON_TIME_FOR_DETECTION: In the present example a value of 0.400 was used. Upper bound in time for increasing swa detection.
YAW_RATE_PD_PRESS_FILT: In the present example a value of 1.0/16.0 was used. Corresponds to roughly 2 Hz cutoff.
AY_FROM_SWA_THRESH_FOR_DIRECTION_CHANGE: In the present example a value of 0.5 g was used. Sign dependent threshold used in the first set of conditions that must exist to disable the yaw rate PD controller from increasing final requested pressure -- when the magnitude of predicted lateral acceleration from steering wheel angle drops below this threshold.
TIME_FOR_DETECTING_SWA_DIRECTION_CHANGE: In the present example a value of .020 sec was used. Minimum contiguous time used to indicate a steering wheel direction change - used as the second set of conditions to disable the yaw rate PD controller from increasing final requested pressure.
SWA_VEL_FOR_DETECTING_SWA_DIRECTION_CHANGE: In the present example a value of 400 deg/s was used. Sign dependent steering velocity threshold which is multiplied by parameter TIME_FOR_DETECTING_SWA_DIRECTION_CHANGE to define the minimum change required in steering wheel angle magnitude, defining the third condition that must be met before disabling the yaw rate PD controller.
Rsc_kp_yaw_rate Yaw Rate Controller Kp
Rsc_kd_yaw_rate Yaw Rate Controller Kd

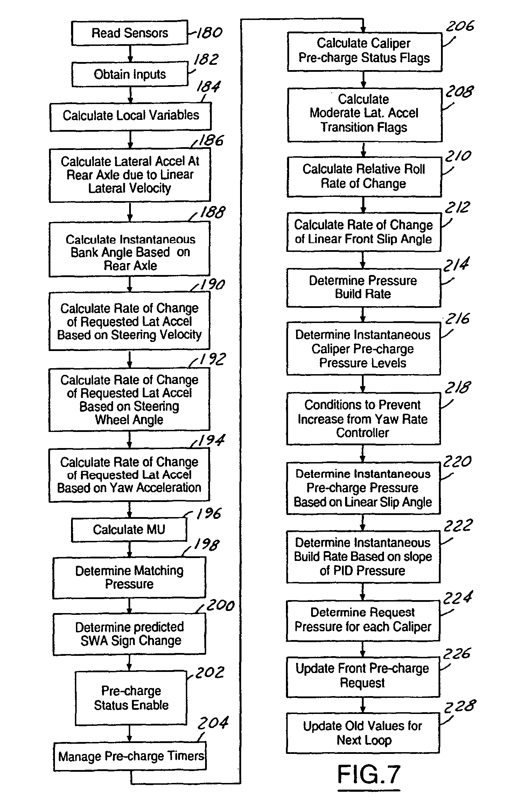

Referring now to Figure 7, a flowchart of one embodiment of the operation of the transition controller 76 is illustrated. It should be noted that not all steps may be included in an actual embodiment. Further, the parameters and constants are set forth by way of example and are not meant to be limiting. In step 180, the various sensors described above are read. In step 182 various inputs from other sensors are obtained. These inputs correspond to inputs 90-142 of Figure 6. In step 184 the local variables described above are obtained. These local variables include the lateral force, slip angle and lateral velocity at the front axle. These are determined as follows:

```
 FrontLatForce=((VHCL_MASS*CG_TO_RR_AXLE/WHEEL_BASE)
 *FLT_LAT_ACC)
      +(SLOW_FLT_YAW_ACC*((VHCL_MASS*CG_TO_RR_AXLE
           *AY_TO_CG)
           +YAW_MMT_INERTIA)/(WHEEL_BASE);

 FrontLnrSlipAngle=-FrontLatForce*(FT_CRNRG_CMPLNCE
      *WHEEL BASE)/(VHCL_MASS*CG_TO_RR_AXLE*G_TO
      _MPS2);

 CurrentFrontLnrLatVel=FrontLnrSlipAngle*REF
      _VELOCITY_YC;
```

Also the lateral force, slip angle and lateral velocity at the rear axle are determined as follows:

```
 RearLatAcc=FLT_LAT_ACC+(SLOW_FLT_YAW_ACC*AY_SNSR_TO
      _RR_AXLE);

 RearLatForce=(VHCL_MASS*(CG_TO_FRT_AXLE/WHEEL_BASE)
      *FLT_LAT_ACC)+(SLOW_FLT_YAW_ACC*((VHCL_MASS*CG
      _TO_FRT_AXLE*AY_TO_CG)-YAW_MMT_INERTIA)
      /WHEEL_BASE;

 RearLnrSlipAngle=(-1)*RearLatForce*(RR_CRNRG
      _CMPLNCE*WHEEL_BASE)/(VHCL_MASS*CG_TO_FRT_AXLE
      *G_TO_MPS2);

 CurrentRearLnrLatVel=RearLnrSlipAngle*REF_VELOCITY
      _YC;
```

In step 186 the component of the lateral acceleration at the rear axle due to the change in linear lateral velocity at the rear axle is calculated as follows:

```
 RearLnrLatAcc=(CurrentRearLnrLatVel-REAR_LNR
      _LAT_VEL)/LOOP_TIME;

 FltRearLnrLatA=ALPHA_LNR_REAR_LATA_FILTER_COEF
      F*RearLnrLatAcc+BETA_LNR_REAR_LATA_FILTER
      _COEFF*REAR_LNR_LAT_ACC;
```

In step 188 the instantaneous bank angle based on rear axle information is determined as follows:

```
 SineOfInstBnkAngle=((RearLatAcc-FltRearLnrLatA)
      -(FLT_YAW_RATE*REF_VELOCITY_YC))*MPS2_TO_G;

 //Limit magnitude of Bank.Angle to 45 degrees if
      (SineOfInstBnkAngle<=-SCALED_ASIN_INPUT_LIMIT)
      INST_BANK_ANGLE_EST = -1.0 * MAX_ANGLE;
 else if (SineOfInstBnkAngle>=SCALED_ASIN_INPUT
      _LIMIT)INST_BANK_ANGLE_EST= MAX_ANGLE;
 else INST_BANK_ANGLE_EST=COMPUTE_ARC_SINE_OF_INPUT
      (SineOfInstBnkAngle);
```

In step 190 the rate of change of requested lateral acceleration based on steering velocity is determined. A product of the steering velocity multiplied by the steering gain of the vehicle is obtained, where the steering gain is defined as the ratio of the lateral acceleration to steering wheel angle in a steady state turn. This gain is expressed as a function of speed. The product is passed through a low pass filter to achieve the resultant rate of change of lateral acceleration being requested by the driver. This signal is used to help define the strength of the transition being requested by the driver. This is determined in the flowing:
temp_For_SWA=REF_VELOCITY_YC*REF_VELOCITY_YC/ (RAD_TO_DEG*WHEEL_BASE*G_TO_MPS2);
K_SWA_TO_AY==temp_For_SWA*G_TO_MPS2/(1+temp_For_SWA *(FT_CRNRG_CMPLNCE-RR_CRNRG_CMPLNCE));
dAYFromSWA=LIMIT(FILTERED_STEER_ANGLE_RATE*K_S MA_TO_AY/AVG_Steering_Ratio, min_dAY_from_SWA, max_dAY_from_SNA);

In step 192 a rate limited lateral acceleration from steering wheel angle dAYfromSWA is determined. The delay factor in the response of the power steering system may cause the system to have to catch-up to the pressure desired by the vehicle operator. For very aggressive steering inputs, power steering catch-up can cause a significant reduction in steering velocity for up to 200ms. This can cause an interruption in pressure build when it is needed most. To prevent this, rate limited versions of dAYfromSWA are implemented for both the positive and negative directions. Each signal is allowed to increase in value as rapidly as the input signal. However, the decrease in value is rate limited by RATE_LIMIT_dAY_FROM_SWA. Both signals are limited to positive values and represent the magnitude of the rate of change in the positive and negative direction respectively. This is determined as follows:

```
  if(dAYFromSWA>POSRateLimiteddAYFromSWA)POSRate
      LimiteddAYFromSWA=dAYFromSWA;
  else
      {
      POSRateLimiteddAYFromSWA-=RATE_LIMIT_dAY
           _FROM_SWA*LOOPTIME;
      if (POSRateLimiteddAYFromSWA<dAYFromSWA) POSRate
           LimiteddAYFromSWA=dAYFromSWA;
      }
 POSRateLimiteddAYFromSWA=MAX(O,POSRateLimited
      dAYFromSWA);
 if(-
 dAYFromSWA>NEGRateLimiteddAYFromSWA)NEGRateLimited
      dAYFromSWA=-dAYFromSWA;
 else
      {
      NEGRateLimiteddAYFromSWA-=RATE_LIMIT_dAY
           _FROM_SWA*LOOPTIME;
      if(NEGRateLimiteddAYFromSWA<(-1*dAYFromSWA))
           NEGRateLimiteddAYFromSWA=-1*dAYFromSWA;
      }
 NEGRateLimiteddAYFromSWA=MAX(O,NEGRateLimiteddAY
      FromSWA);
```

In step 194 a change in lateral acceleration from yaw acceleration dAYfromYawAcc and a change in lateral acceleration from the rate of change of the side slip at the rear axle in dAyFromBetaPRA is determined. Each signal is allowed to increase in value as rapidly as the input signal. These signals are scaled to provide a similar profile to DAyFromSWA. Final max and min DAyDt's are calculated by comparing dAYfromYawAccScldToSWA, dAyFromBetaPRAScldToSWA, and dAYFromSWA. These DayDt's can be positive or negative. Max and min rate limited DayDt's are calculated by comparing dAYfromYawAccScldToSWA, dAyFromBetaPRAScldToSWA, and rate limited DAyFromSWA's. These rate limited DayDt's are always positive. They are calculated as follows:
ssDAyFromYawAcc=LIMIT((ss_dpss_YAW_ACCELERATION2 *ss_mps_REF VELOCITY_YC/(ss_RES_dAYFromSWA/ (rpss_RES_YAW ACC*mps_RES_REF_VELOCITY_YC))), MIN_dAY_FROM_YAW_ACC, MAX_dAY_FROM_YAW_ACC);
ssDAyFromBetaPRA =LIMIT((AYC_SLIP_ANGLE_RATE_RA *(1024.0)/ ((ss_RES_DayFromSWA*p_dpg_RR _CRNRG_CMPLNCE*1024.0)/(dps_RES_BETA_PRIME *pc_G_TO_MPS2))), MIN_dAY_FROM_BETAPRA, MAX_dAY_FROM_BETAPRA);
ssYawAcc2SWARateFraction=AYC_INTPOL2(ss_mps_REF _VELOCITY_YC, YawAcc2SWARate_x_tab,YawAcc2SWA Rate_y_tab, YawAcc2SWARate_len);
ssBetaDotRA2SWARateFraction=AYC_INTPOL2(ss_mps_REF _VELOCITY_YC, BetaDotRA2SWARate_x_tab, BetaDotRA2SWARate_y_tab, BetaDotRA2SWARate len);
ssDAyFrmYwAccScldToSWA=ssDAyFromYawAcc*ssYawAcc2 SWARateFraction/(1024.0):
ssDAyFrmBetaPScldToSWA=ssDAyFromBetaPRA*ssBetaDot RA2SWARateFraction/(1024.0);
ssFinalMaxDAyDt=max(dAYFromSWA, ssDAyFrmYwAccScld ToSWA);
ssFinalMaxDAyDt=max(ssFinalMaxDAyDt, ssDAyFrmBeta PScldToSWA);
ssFinalMaxRtLmtdDAyDt=max(POSRateLimiteddAYFromSWA, ssDAyFrmYwAccScldToSWA); ssFinalMaxRtLmtdDAy Dt=max(ssFinalMaxRtLmtdDAyDt,ssDAyFrmBetaPScld ToSWA);
ssFinalMinDAyDt=min(dAYFromSWA, ssDAyFrmYwAccScld ToSWA);
ssFinalMinDAyDt=min(ssFinalMinDAyDt, ssDAyFrmBeta PScldToSWA);
/*Since NEGRateLimiteddAYFromSWA is limited to positive values, use MAX of negated DAy's derived from YawAcc and BetaP*/
ssFinalMinRtLmtdDAyDt=max(NEGRateLimiteddAYFromSWA, ((-1)*ssDAyFrmYwAccScldToSWA));
ssFinalMinRtLmtdDAyDt=max(ssFinalMinRtLmtdDAyDt, ((-1)*ssDAyFrmBetaPScldToSWA));

In step 196 a rough estimate of the mu level of the road surface is determined. The primary objective is not precise estimation of the mu level (although one could be used), but an indication of the lateral forces expected to be experienced after the transition. The Rough MU estimate is allowed to increase with the magnitude of the lateral acceleration. The value is held high for the period ROUGH_MU_HOLD_TIME following any loop in which the Rough MU estimate is increased by the lateral acceleration. Then it is allowed to ramp down at a predefined ramp rate. The important property for this calculation is that it preserves for the duration of the event, the lateral forces experienced immediately before the transition. This information is then used as a predictor of what the forces are likely to be seen after the transition. This is in turn used to determine the pressure build profile during the transition. The Rough MU signals are bounded between 1.0 and 0.1.

A Rough MU Upper is determined by:

```
 if (FLT_LAT_ACC > RoughMUUpper*G_TO_MPS2)
      {
      ROUGH_MU_UPPER_TIMER=0;
      RoughMUUpper=FLT_LAT_ACC/G_TO_MPS2;
      }
 else
      {
      if (ROUGH_MU_UPPER_TIMER<ROUGH_MU_HOLD_TIME)
           ROUGH_MU_UPPER_TIMER++;
      else ss_RoughMUUpper-=ROUGH_MU_RAMP_DOMN
           _RATE*LOOP_TIME);
      }
 if (RoughMUUpper>max_RoughMU)RoughMUUpper=max
      _RoughMU;
 if (RoughMUUpper<min_RoughMU)RoughMUUpper
      =min_RoughMU;
```

A Rough MU Lower is determined by:

```
 if(-FLT_LAT_ACC>RoughmULower*G_TO_MPS2)
      {
      ROUGH_MU_LOWER_TIMER=0;
      RoughMULower=-FLT_LAT_ACC/G_TO_MPS2;
      }
 else
      {
      if (ROUGH_MU_LOWER_TIMER<ROUGH_MU_HOLD_TIME)
           ROUGH_MU_LOWER_TIMER++;
      else ss_RoughMULower-=(ROUGH_MU_RAMP_DOWN
           _RATE*LOOP_TIME);
      }
 if (RoughMULower>max_RoughMU)RoughMULower=max_Rough
      MU;
 if (ss_RoughMULower<min_RoughMU)RoughMULower=min
      _RoughMU;
```

A Final Rough MU is determined by:
RoughMU=max(RoughMUUpper,RoughMULower);

In step 198 a Matching Pressure is determined. The matching pressure is calculated based on the Rough MU level. Higher mu levels result in higher matching pressure. The matching pressure is used in the prediction strategy to compensate for the finite build rate available from the hydraulic system. The matching pressure is determined in the following:

```
 MatchingPressure=BASE_MATCHING_PRESSURE+RoughMU*
      MATCHING_PRESSURE_MU_GAIN;
 if (MatchingPressure<0.0)MatchingPressure=0.0;
```

In step 200 a predicted SWA sign change is determined. In this section two flags are calculated POS_SWA_EXPECTED and NEG_SMA_ESPECTED. POS_SWA_EXPECTED is set to true if the steering wheel angle is positive in the current loop or expected to be positive within a certain period of time. This period of time or signal lead is mu dependent and is intended to allow more lead in building the caliper precharge pressure for higher mu estimates. It has been experimentally determined that has indicated that on high mu and for large steering rates, initiating the pressure build after the sign crossing of the steering wheel angle may not allow adequate pressure to be built during the transition to cancel the resulting dynamic oversteer. A similar calculation is performed for the negative direction. The prediction of sign change of SWA is determined by:
POS_SWA_EXPECTED=(RoughMU*FILTERED_STEER_ANGLE_RATE *EXPECTED_SWA_LEAD_TIME_MU_GAIN+min (STEERING _WHEEL_ANGLE, MAX_THRESHOLD_FOR_PREDICTED_POS _SWA)>MIN_POS_SWA_THRESHOLD)||(STEERING_WHEEL _ANGLE>MIN_POS_SWA_THRESHOLD);
NEG_SWA_EXPECTED=(RoughMU*FILTERED_STEER_ANGLE_RATE *EXPECTED_SWA_LEAD_TIME_MU_GAIN+max(STEERING _WHEEL_ANGLE, MIN_THRESHOLD_FOR_PREDICTED_POS _SWA)<MAX_POS_SWA_THRESHOLD)||(STEERING_WHEEL _ANGLE<MAX_POS_SWA_THRESHOLD) ;

In step 202 the RSC Precharge Status flags are enabled. The enable flag is true in any loop for which the precharge pressure can be implemented. In the present example the vehicle should be above a minimum speed and the rollover stability control (RSC) system must not be disabled for the flag to be true, otherwise it will be forced to a false state. A recent PID event or a combination of sufficiently high steering 100 velocities and recent large lateral acceleration may also be required for the flag to be set true.

Several steps are used in setting the flags. First, it is determined whether a rapid change in lateral acceleration has recently occurred. This is used as an indicator that a transitional maneuver is occurring. The code for such is:

```
 if(max(FinalMaxDAyDt,-FinalMinDAyDt)>SpeedDpndntAy
      Chng)Recent_Rapid_AY_Counter=RECENT_RAPID_AY
      TIME;
 else if (Recent_Rapid_AY_Counter>0)Recent_Rapid_AY
      _Counter--;
 RECENT_RAPID AY=Recent_Rapid AY_Counter > 0;
```

Next it is determined whether a large rough mu has recently been experienced. This flag is used to indicate that a near limit condition is or has recently occurred.
RECENT_LARGE_ROUGH_MU=RoughMU>LARGE_ROUGH_MU;

Then it is determined whether a moderate linear slip is or has recently occurred at the front axle as in:

```
 if (ABS(FrontLnrSlipAngle)>((FRNT_SLIP_ANGLE
      _THRESHOLD_POS_SIG_DYN*FT_CRNRG_CMPLNCE)))
      RECENT_MODERATE_FRONT_AXLE_LNR_SLIP_COUNTER=
      (RECENT_MODERATE_FRONT_LINEAR_SLIP/LOOP_TIME);
 else if (
 RECENT_MODERATE_FRONT_AXLE_LNR_SLIP_COUNTER>0)
      RECENT_MODERATE_FRONT_AXLE_LNR_SLIP_COUNTER--;
```

Then, it is determined whether a recent absolutely lifted has been determined for a wheel OR whether a recent pre lift has been sensed. This is set forth in code by:

```
  if (((FINAL_WHEEL_LIFT_STATUS[FL]==ABSOLUTELY
      _LIFTED)&&(FLT_LAT_ACC>S16_RND(0.85/g_RES_LAT
      _ACC)))||WDA_LIFT_SUSPECTED[FL])
  {
      RECENT_LEFT_WHEEL_LIFT_TIMER=RECENT_WHEEL_LIFT
           TIME;
  }
 else if (RECENT_LEFT_WHEEL_LIFT_TIMER)RECENT_LEFT
      _WHEEL_LIFT_TIMER--;
 if (RECENT_LEFT_WHEEL_LIFT_TIMER)RECENT_LEFT_WHEEL
      _LIFT=TRUE;
 else
      RECENT_LEFT_WHEEL_LIFT=FALSE;
 if
  (((FINAL_WHEEL_LIFT_STATUS[FR]==ABSOLUTELY_LIFTED)
      &&(FLT_LAT_ACC<S16_RND((-0.85)/g_RES_LAT
      _ACC)))||WDA_LIFT_SUSPECTED[FR])
  {
      RIGHT_WHEEL_LIFT_TIMER=RECENT_WHEEL_LIFT
          _TIME;
  }
 else if
  (RECENT_RIGHT_WHEEL_LIFT_TIMER)RECENT_RIGHT_WHEEL
      _LIFT_TIMER--;
 if (RECENT_RIGHT_WHEEL_LIFT_TIMER)RECENT_RIGHT
      _WHEEL_LIFT=TRUE;
 else
      RECENT_RIGHT_NHEEL_LIFT=FALSE;
```

Another factor is if significant dynamics are present which might warrant a precharge intervention. The significant dynamics variable is an intermediate variable taking into consideration the above recent rapid lateral acceleration, large rough mu, linear slip, lift status, and prelift sensing. The code is implemented as:

```
 SIGNIFICANT_DYNAMICS=
      (RECENT_PID_CTRL
      ||(RECENT_RAPID_AY&&RECENT_LARGE_ROUGH_MU)
      ||((max(FinalMaxDAyDt,-FinalMinDAyDt)>Speed
           DpndntAyChng)&&(RECENT_MODERATE_FRONT
           _AXLE_LNR_SLIP_COUNTER>0))
       ||(FL_Precharge_Press)
       ||(FR_Precharge_Press)
       ||RECENT_LEFT_WHEEL_LIFT
       ||RECENT_RIGHT_WHEEL_LIFT
       ||Predicted_AY_from_SWA>=1.4*g&&FrontLnrSlip
           Angle<=-0.85*FT_CRNRG_CMPLNCE&&WHEEL
           DEPARTURE_ANGLE>=0.1
       ||Predicted_AY_from_SWA<=-1.4*g&&FrontLnrSlip
           Angle>=0.85*FT_CRNRG_CMPLNCE&&WHEEL
           _DEPARTURE_ANGLE<=-0.1
  )
```

Then based on the significant dynamics variable, the precharge pressures and other variables by the following:

```
  if (SIGNIFICANT_DYNAMICS
      &&(REF_VELOCITY_YC>VELOCITY_MIN_10
       ||((FL_Precharge_Press>O||FR_Precharge
           _Press>0)
      &&(REF_VELOCITY_YC>VELOCITY MIN TO EXIT
           _7)))
      && !Get_rsc_disabled
      && !Get_ayc_reverse_movement
      && !Status_first_run
      && !RSC_Disable_after_sensor_self_test
      )
           ENABLE_RSC PRECHARGE=TRUE;
 else ENABLE_RSC_PRECHARGE=FALSE;
```

In step 204 Precharge Timers are managed. Precharge timers are used to allow the precharge strategy to occur during or immediately after the transitional portion of an event. This serves as additional screening criteria to prevent unnecessary precharge interventions.

If the rear linear slip angle is consistent with a left hand turn or the significant dynamics flag indicates there is no significant dynamic activity, the left timer is zeroed out. Otherwise it is incremented to the maximum precharge time. If the rear linear slip angle is consistent with a right hand turn or the significant dynamics flag indicates there is no significant dynamic activity, the right timer is zeroed out. Otherwise it is incremented to the maximum precharge time. This ensures that within a defined period of time, after a dynamic event, a precharge event will not be initiated, reducing the possibility of unnecessary intervention. This is set forth as:

```
 If (RearLnrSlipAngle<=0
      ||!SIGNIFICANT_DYNAMICS
      ||RECENT_PID_ACTIVATION
      ||RECENT_RIGHT_WHEEL_LIFT)
           FL_Precharge_Timer=0;
 else if (FL_Precharge_Timer<MAX_PRECHARGE_TIME)
      FL_Precharge_Timer++;

 if (RearLnrSlipAngle>=0
      ||!SIGNIFICANT_DYNAMICS
      ||RECENT_PID_ACTIVATION
      ||RECENT_LEFT_WHEEL LIFT)
           FR_Precharge_Timer=0;
 else if (FR_Precharge_Timer<MAX_PRECHARGE_TIME)
      FR_Precharge_Timer++;
```

In step 206 individual caliper pre-charge status flags are determined. The status flags indicate whether the pre-charge function is active on a given wheel in a given loop. Pre-charge must be enabled in any loop for which the pre-charge strategy is active. If the precharge timer on a given wheel is below the maximum precharge time, the function can become activated on that wheel based on steering information or side slip angle information. Additionally, the pre-charge function will remain active on a specific wheel as long as there is a non-zero pressure being requested on that wheel.

The continuous time of consistent sign for SSLIN Front or Rear is monitored.

```
 if (FrontLnrSlipAngle>MIN_SLIP_ANGLE_FOR_PRCHG_ACT
           || RearLnrSlipAngle>MIN_SLIP_ANGLE_FOR
               _PRCHG_ACT)
 {
 if (PSTV_SS_LIN<MIN_CONT_TIME_WITH_CONSISTENT_SIGN)
      PSTV_SS_LIN++;
 }
 else if (PSTV_SS_LIN>0)PSTV_SS_LIN--;
 if (FrontLnrSlipAngle<MIN_SLIP_ANGLE_FOR_PRCHG
          _ACT
           IIRearLnrSlipAngle<MIN_SLIP_ANGLE_FOR
               _PRCHG_ACT)
 {
 if (NGTV_SS_LIN<MIN_CONT_TIME_WITH_CONSISTENT_SIGN)
      NGTV_SS_LIN++;
 }
 else if (NGTV_SS_LIN>0) NGTV_SS_LIN--;
```

Then the front left precharge active status flags are determined.

```
 FL_PRECHARGE_ACTIVE=ENABLE_RSC_PRECHARGE&&((((NEG
      _SWA_EXPECTED
      /*Allow FL transition control to activate if
      FR has transition pressure and SWA direction
      is heading towards the right (heading towards
      a negative value)*/
          &&((FinalMinDAyDt<(-SpeedDpndntAyChng))
           ||(FR_Precharge_Press>(0.0) )))
               ||(RearLnrSlipAngle>MIN_SLIP_ANGLE
               _FOR_PRCHG_ACT)
           ||(FrontLnrSlipAngle>MIN_SLIP_ANGLE_FOR
               _PRCHG_ACT))
               &&FL_Precharge_Timer<MAX_PRECHARGE
                    _TIME)
           ||FL_Precharge_Press>0.0)
           ||PSTV_SS_LIN>=MIN_CONT_TIME_WITH
          _CONSISTENT_SIGN
```

When the front right precharge active status flags are determined:

```
  FR_PRECHARGE_ACTIVE=ENABLE_RSC_PRECHARGE&&(((POS
      _SWA_EXPECTED
  /*Allow FR transition control to activate if FL has
  transition pressure and SWA direction is heading
  towards the left (heading towards a positive
 value)*/
      &&((FinalMaxDAyDt>SpeedDpndntAyChng)||(FL
           _P recharge_Press>(0.0)))
      ||(RearLnrSlipAngle<MIN_SLIP_ANGLE_FOR_PRCHG
           _ACT)
      ||(FrontLnrSlipAngle<MIN_SLIP_ANGLE_FOR_PRCHG
           _ACT))&&FR_Precharge_Timer<MAX_PRECHARGE
           _TIME)
      ||FR_Precharge_Press>0.0);
      ||PSTV_SS_LIN>=MIN_CONT_TIME_WITH_CONSISTENT
           _SIGN
```

In step 208 calculate moderate lateral acceleration transition flags. If a lateral acceleration of a defined magnitude precedes a transition controller event associated with the opposite direction of turning within a predefined period of time, then a moderate transition flag is set for that direction until the transition controller event has been exited. These flags are used in the wheel departure angle calculation to bias any changes in total roll angle and reference bank angle towards an increasing roll signal for control.

First a counter (moderate-positive-AY-counter) is implemented which is set to a transition hold time any time the filtered lateral acceleration exceeds the transition threshold, and is decremented to zero by one count per if the lateral acceleration is not exceeding the transition lateral acceleration threshold.

```
  if (FLT_LAT_ACC>TRANSITION_AY_THRESHOLD)MODERATE
      POSITIVE_AY_COUNTER=TRANSITION_HOLD_TIME;
  else if (MODERATE_POSITIVE_AY_COUNTER>0)MODERATE
      _POSITIVE_AY_COUNTER--;
```

Next, the recent positive lateral acceleration flag is calculated. This flag is set to true if the counter is greater than zero, otherwise it is set to false for a zero value of the counter.

```
  if (MODERATE_POSITIVE_AY_COUNTER>0)RECENT_POSITIVE
      _AY=TRUE;
  else RECENT_POSITIVE_AY=FALSE;
```

The counter is now implemented for moderate negative lateral acceleration values. The negative counter is set to a transition hold time any time the filtered lateral acceleration falls below the negative of the transition threshold, and is decremented to zero by one count per if the lateral acceleration is not below the negative of the transition threshold.

```
  if (FLT_LAT_ACC<-TRANSITION_AY_THRESHOLD)
      MODERATE_NEGATIVE_AY_COUNTER=TRANSITION
      _HOLD_TIME;
  else if (MODERATE_NEGATIVE_AY_COUNTER>0)MODERATE
 _NEGATIVE_AY_COUNTER--;
```

Similar to above, the recent negative lateral acceleration flag is calculated. This flag is set to true if the counter is greater than zero, otherwise it is set to false for a zero value of the counter.

```
  if (MODERATE_NEGATIVE_AY_COUNTER>0)RECENT_POSITIVE
      _AY=TRUE;
 else RECENT POSITIVE_AY=FALSE;
```

Next, the right to left transition flag is determined based on the recent negative lateral acceleration flag and the front right transition controller active flag. If both flags are set to true, then the right to left transition flag is set to true. If the front right transition controller active flag is false, the right to left transition controller flag is set to false. Otherwise, the value is held from the previous loop. This results in a flag that remains true until the front right transition controller event is exited.

```
 if (RECENT_NEGATIVE_AY&&FR_Precharge_Press) RIGHT_TO
      _LEFT_TRANSITION=TRUE;
 else
 if (!FR_Precharge_Press)RIGHT_TO_LEFT_TRANSITION
      =FALSE;
 else
 RIGHT_TO_LEFT_TRANSITION=RIGHT_TO_LEFT_TRANSITION;
```

Now the same calculation is performed for a left to right transition flag. If the recent negative lateral acceleration flag is true and the front left transition controller active flag if true, then the left to right transition flag is set to true. If the front left transition controller active flag is false, the left to right transition controller flag is set to false. Otherwise, the value is held from the previous loop. This results in a flag that remains true until the front left transition controller event is exited.

```
 if (RECENT_POSITIVE AY&&FL_Precharge_Press) LEFT_TO
      RIGHT_TRANSITION=TRUE;
 else if (!FL_Precharge_Press) LEFT_TO_RIGHT
      _TRANSITION=FALSE;
 else LEFT_TO_RIGHT_TRANSITION=LEFT_TO_RIGHT
 _TRANSITION;
```

Then a timer is created to limit duration of high target slip request in the following:

```
 if
  (union_PRECHARGE_FLAGS.st_PRECHARGE.bf_bool_RIGHT
      _TO_LEFT_TRANSITION==TRUE)
 {
 if (R2L_TRANSITION_COUNTER<TIME_LIMIT_TO_REQ_EXCSV
      _SLIP_AFTER_TRANSITION)R2L_TRANSITION COUNTER
      ++;
 }
 else
 { R2L_TRANSITION_COUNTER=0;
 }
 if
 (union_PRECHARGE_FLAGS.st_PRECHARGE.bf_bool_LEFT_TO
      _RIGHT_TRANSITION==TRUE)
 {
      if (L2R_TRANSITION_COUNTER<TIME_LIMIT_TO_REQ
          _EXCSV_SLIP_AFTER_TRANSITION)L2R
          _TRANSITION_COUNTER++;
 }
 else
 { L2R_TRANSITION_COUNTER=0;
 }
```

In step 210 the rate of change of relative roll angle is determined. The relative roll velocity is calculated by simple differentiation of the relative roll angle placed in series with a first order low pass filter as in:

```
 REL_ROLL_VELOCITY+=((REL_ROLL_ANGLE-Z1_REL_ROLL
      _ANGLE)/LOOP_TIME)-REL_ROLL_VELOCITY)/Rel_Roll
      _Vel_FLT_Coeff;
```

In step 212, the rate of change of linear front slip angle is determined. Similarly, the linear front tire side slip angle velocity is calculated by simple differentiation of the linear front side slip angle placed in series with a first order low pass filter.

```
 Temp=MAX(min_Ref Velocity_YC,Ref_Velocity_YC);
 Lin_Front Vel+=((CurrentFrontLnrLatVel-FRONT_LNR
      _LAT_VEL)*(rad_to_deg/LOOP_TIME)/Temp
           -Lin_Front_Vel)/lin_frnt_vel_filter
               _coeff;
```

In step 214 a lower target build rate is used, yielding larger prediction pressures when steady state limit driving is detected. This is set forth in:

```
 if
  ((Predicted_AY_from_SWA>=1.4*g&&(FrontLnrSlipAngle
      <=-0.85*FT_CRNRG_CMPLNCE))
      &&(WHEEL_DEPARTURE_ANGLE>=(0.1/deg_RES_ROLL
          _ANGLE)))||(Predicted_AY_from_SWA<=-.4*g
           &&(FrontLnrSlipAngle>=(0.85*FT_CRNRG
          _CMPLNCE)
               &&(WHEEL_DEPARTURE_ANGLE<=(-0.1/deg
                    _RES_ROLL_ANGLE)))
 )
 {
          RECENT_STEADY_STATE_CORNERING_TIMER
               =RECENT_STDY_STATE_TURN_NEAR_LIMIT;
 }
 else
 {
 if (RECENT_STEADY_STATE_CORNERING_TIMER>0)RECENT
      _STEADY_STATE_CORNERING_TIMER-
 }
 if (RECENT_STEADY_STATE_CORNERING_TIMER>0)
 {
          TrgtBldRateStdyState=TARGET_BUILD_RATE;
 }
 else
 {
          TrgtBldRateStdyState=Rsc_target_build
               _rate;
 }
```

In step 216 an instantaneous caliper pre-charge requested pressure levels based on relative roll information is determined. First, a pressure is calculated based on proportional plus derivative control on roll information. Relative roll angle is used for the proportional term, roll velocity is used for the derivative term. The relative roll angle is used because it provides the required level of accuracy during the critical portion of the transition, during the zero crossing, and because it is not influenced by banks and is not influenced by integrator error or errors in reference road bank. This accuracy allows tighter thresholds than would be allowable for the PID controller. Additionally, this signal offers a high level of consistency and repeatability in the timing of the pressure build that is a critical property for the initial portion of the control intervention. The PD pressure is filtered as required to achieve an adequately smooth signal.

Next the derivative of the PID pressure is calculated for determining the instantaneous relative roll pressure. The instantaneous pressure provides a predictive functionality for the PD controller. It is intended to provide a mechanism to compensate for the finite rate at which pressure can be built. Additionally, it can provide a significant smoothing effect on the leading edge of the pressure trace without delaying the pressure build. This is helpful in building the required level of pressure while minimizing the excitation of the pitching mode of the vehicle. The instantaneous pressure is that pressure which would need to be in the caliper in the current loop such that if the pressure is increased at the target build rate, the matching pressure would be achieved at the same time the PID controller is expected to request the matching pressure. The point in time for which the PID controller is expected to request the matching pressure is obtained by taking the derivative of the PID pressure and projecting forward to the point in time when the intersects the matching pressure.

Front left relative roll instantaneous pressure is determined by:

```
  FLRelRollPDPress+=(KP_REL_ROLL*(-REL_ROLL_ANGLE
                -REL_ROLL_DB)-KD_REL_ROLL*FLT
                _ROLL_RATE
                -FLRelRollPDPressZl)*REL_ROLL
                _PD_PRESS_FILT

  FLRelRollPDPress=min(FLRelRoIIPDPress, MAX_FL_REL
      _ROLL_PD_PRESS);

  FLRelRollPDPress=max(FLRelRollPDPress, MIN_FL_REL
      _ROLL_PD_PRESS);

  dFLRelRollPDPress=FLRelRollPDPress-FLRelRollPD
       PressZl;

  FLRelRollPDPressZ1=FLRelRollPDPress;

  FLRelRollInstPress=MatchingPressure-(Matching
       Pressure-FLRelRollPDPress)*TARGET_BUILD
      _RATE /max(TARGET_BUILD_RATE, dFLRelRoll
       PDPress /LOOP_TIME);
```

Then the Front Right relative roll instantaneous pressure is determined by:

```
  FRRelRollPDPress+=(KP_REL_ROLL*(REL_ROLL_ANGLE-REL
      _ROLL_DB)+KD_REL_ROLL*FLT_ROLL_RATE-FRRelRoll
       PDPressZ1)*REL_ROLL_PD_PRESS_FILT)

  FRRelRollPDPress=min(FRRelRollPDPress, MAX_FL_REL
      _ROLL_PD_PRESS);

  FRRelRollPDPress=max(FRRelRollPDPress, MIN_FL_REL
      _ROLL_PD_PRESS);

  dFRRelRollPDPress=FRRelRollPDPress-FRRelRollPD
       PressZ1;

  FRRelRollPDPressZl=FRRelRollPDPress;

  FRRelRollInstPress=MatchingPressure-(Matching
       Pressure-FRRelRollPDPress)*TARGET_BUILD_RATE
       /max(TARGET_BUILD_RATE, dFRRelRollPDPress
       /LOOP_TIME);
```

In step 218 the conditions for applying the Yaw Rate PID controller to prevent a pressure increase from the yaw rate controller when driver is steering out of a turn are determined.

When transitioning from a right to a left turn, determine when change in SWA direction to the left has been well established; use as a condition for blocking the YAW RATE PD controller from further increasing transition pressure on FL wheel

```
  if ((STEERING_WHEEL_ANGLE-Z1_STEERING_WHEEL_ANGLE)
       >=0)
  {
       if (INCREASING_SWA_COUNTER<(UPPER_BOUND_ON
       _TIME_FOR_DETECTION/LOOP_TIME SEC))
       { INCREASING_SWA_COUNTER++;
       }
       if (POSITIVE_DELTA_SWA_INT<UPPER_BOUND_ON
       _DELTA_SWA_INT)
       { //Accumulate positive delta SWA POSITIVE
           _DELTA_SWA_INT+=(STEERING_WHEEL_ANGLE-Z1
           _STEERING_WHEEL_ANGLE);
       }
  }
  else // SWA is heading to the right
  {
       INCREASING_SWA_COUNTER=0; // Reset increasing
       SWA counter POSITIVE_DELTA_SWA_INT=0; // Reset
       delta SWA integration
  }
  if
  (LARGE_LAT_ACC_COUNTER==0|| (Predicted_AY_from_SWA>-
      AY_FROM_SWA_THRESH_FOR_DIRECTION_CHANGE
       &&INCREASING_SWA_COUNTER>=TIME_FOR_DETECTING
      _SWA _DIRECTION_CHANGE&&POSITIVE_DELTA_SWA_INT
      >=(SWA_VEL_FOR_DETECTING_SWA_DIRECTION_CHANGE
      *TIME_FOR_DETECTING_SWA_DIRECTION_CHANGE))
 )
 // Disable YawRate PD controller on FL from
 increasing transition pressure if LatAcc at CG
 magnitude did not exceed lateral accel threshold
  (tunable parameter set to 0.5 g's) within the past
 3 seconds or anytime the predicted Ay from SWA is
 greater than (-0.5 g) and SWA and SWA_VEL indicate
 a consistent positive sign trend
  {
 ROLL_FLAG.bf_bool_FL_DISABLE_YR_PD_PR_INC=TRUE;
  }
 else
  {
 ROLL_FLAG.bf_bool_FL_DISABLE_YR_PD_PR_INC=FALSE;
  }
```

In the case when transitioning from a left to a right turn, it is determined when a change in SWA direction to the right has been well established; to use as a condition for blocking the YAW RATE PD controller from further increasing this transition pressure on FR wheel, the following is used:

```
 if (STEERING_WHEEL_ANGLE-Z1_STEERING_WHEEL_ANGLE
      <=0)
  {
      if
  (DECREASING_SWA_COUNTER<UPPER_BOUND ON TIME_FOR
      _DETECTION/LOOP_TIME_SEC)
      { // Increase counter each loop delta
           SWA is not negative DECREASING_SWA
          COUNTER ++;
      }
      if (NEGATIVE_DELTA_SWA_INT>-UPPER_BOUND_ON
           _DELTA_SWA_INT)
      { // Accumulate positive delta SWANEGATIVE
           _DELTA_SWA_INT+=STEERING_WHEEL_ANGLE-Z1
           _STEERING_WHEEL_ANGLE;
      }
  }
 else // SWA is heading to the left
  {
       DECREASING_SWA_COUNTER=0; // Reset decreasing
       SWA counter
       NEGATIVE_DELTA_SWA_INT=0; // Reset delta SWA
       integration
  )
  if
  (LARGE_LAT_ACC_COUNTER==0||(Predicted_AY_from_SWA
       <AY_FROM_SWA_THRESH_FOR_DIRECTION_CHANGE&&
       DECREASING_SWA_COUNTER>=TIME_FOR_DETECTING_SWA
      _DIRECTION_CHANGE&&NEGATIVE_DELTA_SWA_INT<=
       (SWA_VEL_FOR_DETECTING_SWA_DIRECTION_CHANGE
       *TIME_FOR_DETECTING_SWA_DIRECTION_CHANGE))
  }
  //Disable YawRate PID controller on FR from
  increasing transition pressure if LatAcc at CG
  magnitude did not exceed lateral accel threshold
  (tunable parameter set to 0.5 g's) within the past
  3 seconds or anytime the predicted Ay from SWA is
  less than +0.5 g and SWA and SMA_VEL indicate a
  consistent negative sign trend
  {
       ROLL_FLAG.bf_bool_FR_DISABLE_YR_PD_PR_INC
           =TRUE;
  }
  else
  {
       ROLL_FLAG.bf_bool_FR_DISABLE_YR_PD_PR_INC
           =FALSE;
  }
```

Then the instantaneous caliper precharge requested pressure levels based on yaw rate are determined.

```
  FLYawRatePDPress=LIMIT((FL_YAW_RATE_PD_PRESS_Z1+
       (Rsc_kp_yaw_rate*(-FLT_YAW_RATE-SpeedDpndnt
       YRDB))-Rsc_kd_yaw_rate*SLOW_FLT_YAW_ACC-FL
      _YAW_RATE_PD_PRESS_Z1)/(1.0/YAW_RATE PD PRESS
      _FILT)), MIN_PD_PRESS, MAX_PD_PRESS);

  dFLYawRatePDPress=FLYawRatePDPress-FL_YAW_RATE_PD
      _PRESS_Z1;

  FL_YAW_RATE_PD_PRESS_Z1=FLYawRatePDPress;

  #if (USE_LOWER_TARGET_BUILD_RATE_FOR_STEADY_STATE
       _TURNS) FLYawRateInstPress=MatchingPressure
       -(MatchingPressure-FLYawRatePDPress)*TrgtBld
       RateStdyState/max(TrgtBldRateStdyState, dFLYaw
       RatePDPress/LOOP_TIME_SEC));

  #else

       FLYawRateInstPress=MatchingPressure-(Matching
           Pressure-FLYawRatePDPress)*Rsc_target
           _build rate/max(Rsc_target_build_rate,
           dFLYawRatePDPress/LOOP_TIME_SEC));

  #endif

       FRYawRatePDPress=LIMIT((FR_YAW_RATE_PD_PRESS
           _Zl+(Rsc_kp_yaw_rate*(FLT_YAW_RATE
           -SpeedDpndntYRDB)+Rsc_kd_yaw_rate*SLOW
           _FLT_YAW_ACC)-FR_YAW_RATE_PD_PRESS_Z1)/
           (1.0/YAW_RATE_PD_PRESS_FILT)), MIN_PD
           _PRESS, MAX_PD_PRESS);

       dFRYawRatePDPress=FRYawRatePDPress-FR_YAW_RATE
           _PD_PRESS_Z1;

       FR_YAM_RATE_PD_PRESS_Z1=FRYawRatePDPress;

       #if (USE_LOWER_TARGET_BUILD_RATE_FOR_STEADY
           _STATE_TURNS) FRYawRateInstPress=Matching
           Pressure-(MatchingPressure-FRYawRatePD
           Press)*ss_bps_TrgtBldRateStdyState/max
           (TrgtBldRateStdyState, dFRYawRatePDPress*
           (1.0/LOOP_TIME_SEC)));

  #else

       FRYawRateInstPress=MatchingPressure-(Matching
           Pressure-FRYawRatePDPress)*Rsc_target
           _build_rate/max(Rsc_target_build_rate,
           dFRYawRatePDPress*(1.0/LOOP_TIME_SEC)));

  #endif
```

In step 220 the instantaneous caliper precharge pressures based on front linear slip angle are determined. In this section, calculations are performed which are similar to those used for the Relative Roll PD pressure. Instead of Relative Roll angle for the proportional term, the linear side slip angle of the front axle is used. Instead of roll velocity, the rate of change of the front linear slip angle is used for the derivative term.

First, the Front Left front "front linear slip angle" instantaneous pressure is determined by:

```
  FLSSLinFrontPDPress+=(KP_SS_LIN_FRONT*(FrontLnrSlip
      Angle-
  SS_LIN_FRONT_DB)+KD_SS_LIN_FRONT*Lin_Front_Vel-FLSS
      LinFrontPDPressZ1)*SS_LIN_PD_PRESS_FILT;

  dFLSSLinFrontPDPress=FLSSLinFrontPDPress-FLSS
      LinFrontPDPressZ1;

  FLSSLinFrontPDPressZ1=FLSSLinFrontPDPress;

  FLSSLinFrontInstPress=MatchingPressure-(Matching
       Pressure-FLSSLinFrontPDPress)*TARGET_BUILD
      _RATE/max(TARGET_BUILD_RATE, dFLSSLinFront
      PDPress /LOOP_TIME);
```

Then Front Right front "front linear slip angle" instantaneous pressure is determined by:

```
FRSSLinFrontPDPress+=(KP_SS_LIN_FRONT*(-Front
      LnrSlipAngle-SS_LIN_FRONT_DB)-KD_SS_LIN_FRONT*
      Lin_Front_Vel-FRSSLinFrontPDPressZ1)*SS_LIN
      _PD_PRESS_FILT;

  dFRSSLinFrontPDPress=FRSSLinFrontPDPress-FRSSLin
      FrontPDPressZ1;

  FRSSLinFrontPDPressZ1=FRSSLinFrontPDPress;

  FRSSLinFrontInstPress=MatchingPressure-(Matching
      Pressure-FRSSLinFrontPDPress)*TARGET_BUILD
      _RATE/max(TARGET_BUILD_RATE, dFRSSLinFront
      PDPress/LOOP_TIME);
```

In step 222 the instantaneous build rate based on the slope of instantaneous PID pressure in relation to the matching pressure and the length of time it would take for the prior value of precharge pressure to reach the matching pressure level is determined.

First the front left FL instantaneous build rate based on RelRoll PD information is determined.

```
  PDRelRollMatchPressDelta[FL]=MatchingPressure-
      FLRelRollPDPress;
  if (PDRelRollMatchPressDelta[FL]<=0)
  {
  InstRelRollBuildRate[FL]=(MIN_INST_BUILD_RATE);
  }
 else
  {
      //Put lower limit on denominator to avoid
      divide by zero
      PDRelRollMatchPressDelta[FL]=max(PDRelRoll
           MatchPressDelta[FL], (MIN_MATCH_PRESS_2
           _PD_PRESS_DELTA));
      //Calculate RelRoll based build rate, and
      bound between 100 and 300 bar/s
      InstRelRollBuildRate[FL]=
           LIMIT((((MatchingPressure-FL_Precharge
               _Press)*(dFLRelRollPDPress*(1.0/LOOP
               TIME)))/PDRelRollMatchPressDelta
                [FL]), (MIN_INST_BUILD_RATE), (MAX
               _INST_BUILD_RATE));
  }
```

Then the FL instantaneous build rate based on Yaw Rate PD information is determined.

```
 ssPDYawRateMatchPressDelta[FL]=ss_MatchingPressure
      -ss_FLYawRatePDPress;
 if (ssPDYawRateMatchPressDelta[FL]<=0)
  {
      ssInstYawRateBuildRate[FL]=MIN_INST_BUILD_RATE
           /bar_RES_BRAKE_PRESSR;
  }
 else
  { //Put lower limit on denominator to avoid
      divide by zeros
      sPDYawRateMatchPressDelta[FL]=max(ssPDYawRate
      MatchPressDelta[FL],
  MIN_MATCH_PRESS_2_PD_PRESS_DELTA/bar_RES_BRAKE
  _PRESSR);
       //Calculate YawRate based build rate, and
       bound between 100 and 300 bar/s
       ssInstYawRateBuildRate[FL]
           =LIMIT(((ss_MatchingPressure-ss_FL
           _Precharge_Press)*ss_dFLYawRatePDPress
           *1.0/p_LOOP_TIME_SEC/ssPDYawRateMatch
           PressDelta[FL]),
                MIN_INST_BUILD_RATE/bar_RES_BRAKE
                     _PRESSR,
                MAX_INST_BUILD_RATE/bar_RES_BRAKE
                     PRESSR) ;
  }
```

Then the FL instantaneous build rate based on SSLinFront PD information is determined.

```
  PDSSLinMatchPressDelta[FL]=MatchingPressure-FLSS
       LinFrontPDPress;
  if (PDSSLinMatchPressDelta[FL]<=0)
  {
           InstSSLinFrntBuildRate[FL]=(MIN_INST
                BUILD RATE);
  }
  else
  {
           //Put lower limit on denominator to avoid
           divide by zero
           PDSSLinMatchPressDelta[FL]=max(PDSSLin
                MatchPressDelta[FL], (MIN MATCH
                _PRESS_2_PD_PRESS_DELTA));
           //Calculate SSLinFront based build rate,
           and bound between 100 and 300 bar/s
           InstSSLinFrntBuildRate[FL]=
                LIMIT((((MatchingPressure-FL
                _Precharge_Press)*(dFLSSLinFrontPD
                Press*(1.0/LOOP_TIME))) /
  PDSSLinMatchPressDelta[FL]),
           (MIN_INST_BUILD_RATE), (MAX_INST_BUILD
                _RATE));
  }
```

Then a final FL instantaneous build rate by taking maximum of RelRoll and SSLinFront rates.

```
 InstBuildRate[FL]=max(InstRelRollBuildRate[FL],
      InstSSLinFrntBuildRate[FL]);
```

The same process is repeated for the front right FR. First, the FR instantaneous build rate based on RelRoll PD information is determined.

```
 PDRelRollMatchPressDelta[FR]=MatchingPressure-FR
      RelRollPDPress;
 if (PDRelRollMatchPressDelta[FR]<=0)
  {
           InstRelRollBuildRate[FR]=(MIN_INST_BUILD
               _RATE);
 }
 else
 {
           //Put lower limit on denominator to avoid
          divide by zero
           PDRelRollMatchPressDelta[FR]=max(PDRel
               RollMatchPressDelta[FR], (MIN_MATCH
               _PRESS_2_PD_PRESS_DELTA));
           //Calculate RelRoll based build rate, and
          bound between 100 and 300 bar/s
           InstRelRollBuildRate[FR]=
               LIMIT((((MatchingPressure-FR
               _Precharge_Press)
                (dFRRelRollPDPress*(1.0/LOOP_TIME)))
               /PDRelRollMatchPressDelta[FR]),
                (MIN_INST_BUILD_RATE),(MAX_INST
               _BUILD_RATE));
 }
```

Then the calculation of FR instantaneous build rate based on Yaw Rate PD information is performed by:

```
 ssPDYawRateMatchPressDelta[FR]=ss_MatchingPressure
      -ss_FRYawRatePDPress;
 if (ssPDYawRateMatchPressDelta[FR]<=0)
 {
           ssInstYawRateBuildRate[FR]=MIN_INST_BUILD
               _RATE/bar_RES_BRAKE_PRESSR;
 }
 else
 { //Put lower limit on denominator to avoid
            divide by zero
            ssPDYawRateMatchPressDelta[FR]=max(ssPD
                YawRateMatchPressDelta[FR],

  MIN_MATCH_PRESS_2_PD_PRESS_DELTA/bar_RES_BRAKE
       _PRESSR);
            //Calculate YawRate based build rate, and
            bound between 100 and 300 bar/s
            ssInstYawRateBuildRate[FR]=
                LIMIT(((ss_MatchingPressure-ss_FR
                     _Precharge_Press)*
                ss_dFRYawRatePDPress*1.0/p_LOOP_TIME
                     _SEC/
                ssPDYawRateMatchPressDelta[FR]),
                     MIN_INST_BUILD_RATE/bar_RES
                         _BRAKE_PRESSR,
                     MAX_INST_BUILD_RATE/bar_RES
                         _BRAKE_PRESSR);
  }
```

After, the FR instantaneous build rate based on SSLinFront PD information is determined by:

```
  PDSSLinMatchPressDelta[FR]=MatchingPressure-FRSS
       LinFrontPDPress;
  if (ssPDSSLinMatchPressDelta[FR]<=0)
  {
            InstSSLinFrntBuildRate[FR]=(MIN_INST
                _BUILD_RATE);
  }
  else
  {
            //Put lower limit on denominator to avoid
           divide by zero
            PDSSLinMatchPressDelta[FR]=max(PDSSLin
                MatchPressDelta[FR],
                     (MIN_MATCH_PRESS_2_PD_PRESS
                         _DELTA));
            //Calculate SSLinFront based build rate,
           and bound between 100 and 300 bar/s
           InstSSLinFrntBuildRate[FR]=
                LIMIT((((MatchingPressure-FR
                     _Precharge_Press)
                *(dFRSSLinFrontPDPress*(1.0/LOOP
                     _TIME)))
                /PDSSLinMatchPressDelta[FR]),
                     (MIN_INST_BUILD_RATE),(MAX
                     _INST_BUILD_RATE) );
  }
```

Then the final FR instantaneous build rate by taking maximum of RelRoll and SSLinFront rates

```
  InstBuildRate[FR]=max(InstRelRollBuildRate[FR],
       InstSSLinFrntBuildRate[FR] );
```

In step 224, the requested pressures for each caliper are determined as follows.

Front left requested pressures are determined by:
FLInstPressRequest=0.0;
FLInstPressRequest=max(FLInstPressRequest, FLRel RollInstPress);
FLInstPressRequest=max(FLInstPressRequest, FLSS LinFrontInstPress);
FLInstPressRequest=max(FLInstPressRequest,ss_FLYaw RateInstPress);
FLInstPressRequest=min(FLInstPressRequest, Matching Pressure);
FLInstPressRequest=max(FLInstPressRequest, FLRel RollPDPress);
FLInstPressRequest=max(FLInstPressRequest, FLSS LinFrontPDPress);
FLInstPressRequest=max(FLInstPressRequest,ss_FLYaw RatePDPress);

Front right requested pressures are determined by:
FRInstPressRequest=0.0;
FRInstPressRequest=max(FRInstPressRequest, FRRel RollInstPress);
FRInstPressRequest=max(FRInstPressRequest, FRSS LinFrontInstPress);
FRInstPressRequest=max(FRInstPressRequest,ss_FRYaw RateInstPress);
FRInstPressRequest=min(FRInstPressRequest, Matching Pressure);
FRInstPressRequest=max(FRInstPressRequest, FRRel RollPDPress);
FRInstPressRequest=max(FRInstPressRequest, FRSS LinFrontPDPress);
FRInstPressRequest=max(FRInstPressRequest,ss_FRYaw RatePDPress);

In step 226 the front left caliper precharge requests are updated:

```
 if(FL_PRECHARGE_ACTIVE)
 {
```

If the RelRoll or SSLin PD pressure requests an increase, the requested pressures are ramped up.

```
 if ((FLRelRollPDPress>FL_Precharge_Press)||(FLSSLin
      FrontPDPress>FL_Precharge_Press)
           || FLYawRatePDPress>FL-Precharge_Press)
      {
      FL_Precharge_Press+=LARGE_DYNAMICS_BUILD_RATE*
          LOOP_TIME;
 }
```

If the instantaneous pressure requests an increase, the requested pressures are ramped up.

```
 else if (FLInstPressRequest>ss_FL_Precharge_Press)
      {
      if (RECENT_PID_ACTIVATION[FL]||RECENT_RIGHT
          _WHEEL_LIFT)
          FL_Precharge_Press+=LARGE_DYNAMICS_BUILD
               _RATE*LOOP_TIME;
      }
      else
      {
          FL_Precharge_Press+=(InstBuildRate[FL]
               *LOOP_TIME);
 }
```

If the steering information suggests a transitional event, the pressure is ramped up to a low mu dependent value in the following:

```
 else if(NEG_SWA_EXPECTED
          &&FinalMinRtLmtdDAyDt >SpeedDpndntAy
               Chng
          &&FL_Precharge_Press<RoughMU*BASE
               _PRESSURE_MU_GAIN)
           {
          FL_Precharge_Press+=TARGET_BUILD_RATE
          *LOOP_TIME;
           }
```

If a pressure increase is not requested AND no PID pressure increase is requested, the requested pressure is ramped down.

```
 else if ((FL_Precharge_Timer<PRECHARGE_BUILD_TIME)
      &&((PID_STBLZ_PRES[FL]>FL_Precharge_Press)
           II(!PID_FL_INCREASE_REQUESTED_PRESSURE))
               &&(REL_ROLL_ANGLE>-REL_ROLL_DB)
                    &&FinalMinRtLmtdDAyDt<Speed
                        DpndntAyChng)
           {
          FL_Precharge_Press-=TARGET_DUMP_RATE*OOP
               TIME;
 }
```

Any time the timer is above the build time AND no PID pressure increase is requested AND RelRollAngle is smaller than the RelRollDB, a reduction in pressure is forced.

```
 if(FL_Precharge_Timer>=PRECHARGE_BUILD_TIME
          &&(PID_STBLZ_PRES[FL]>FL_Precharge_Press
               II!PID_INCREASE_REQUESTED_PRESSURE
                    [FL])
          &&REL_ROLL_ANGLE>-REL_ROLL_DB)
           {
          temp=FL_Precharge_Press/(max(1,MAX
               _PRECHARGE_TIME-FL_Precharge_Timer);
          temp=min(2*TARGET_DUMP_RATE*LOOP_TIME,
               temp);
          temp=max(TARGET_DUMP_RATE*LOOP_TIME,
               temp);
           FL_Precharge_Press-=temp;
           }
      FL_Precharge_Press=max(O.O, FL_Precharge
           Press);
      }
 else
      {
      FL_Precharge_Press=0.0;
      }
```

In a similar manner the front right precharge request is updated.

```
 If (FR_PRECHARGE_ACTIVE)
      {
```

If the RelRoll or SSLin PD pressure requests an increase, the requested pressure is ramped up.

```
 if (FRRelRollPDPress>FR_Precharge_Press||FRSSLin
      FrontPDPress>FR_Precharge_Press
               ||FRYawRatePDPress>FR_Precharge
                    _Press)
      {
      FR_Precharge_Press+=LARGE_DYNAMICS_BUILD_RATE
          *LOOP_TIME;
      }
```

If the instantaneous pressure requests an increase, the requested pressure is ramped up.

```
 else if(FRInstPressRequest>FR_Precharge_Press)
      {
      if (RECENT_PID_ACTIVATION[FR]||RECENT_LEFT
          _WHEEL_LIFT)
      {
               FR_Precharge_Press+=LARGE_DYNAMICS
                    _BUILD_RATE*p_LOOP_TIME_SEC;
      }
      else
      {
      FR_Precharge_Press+=(InstBuildRate[FR]*LOOP
          _TIME);
      }
```

If the steering information suggests a transitional event, the pressure is ramped up to a low mu dependent value

```
  else if (POS_SWA_EXPECTED
      &&FinalMaxRtLmtdDAyDt>SpeedDpndntAyChng
      &&FR_Precharge_Press<RoughMU*BASE_PRESSURE
           _MU_GAIN)
      {
      FR_Precharge_Press+=TARGET_BUILD_RATE*LOOP
           _TIME;
      }
```

If a pressure increase is not requested AND no PID pressure increase requested, then the requested pressure is ramped down.

```
 else if (FR_Precharge_Timer<PRECHARGE_BUILD_TIME
           && (PID_STBLZ_PRES[FR]>FR_Precharge_Press
                ||!PID_INCREASE_REQUESTED_PRESSURE
                    [FR])
           &&REL_ROLL_ANGLE<REL_ROLL_DB
           &&FinalMaxRtLmtdDAyDt<SpeedDpndntAyChng
                {
               FR_Precharge_Press-=TARGET_DUMP
                    _RATE*LOOP_TIME;
      }
```

Any time the timer is above the build time AND no PID pressure increase is requested AND RelRollAngle is smaller than the RelRollDB, force a reduction in pressure.

```
 if((FR_Precharge_Timer>=PRECHARGE_BUILD_TIME
      &&(PID_STBLZ_PRES[FR]>FR_Precharge_Press
           ||!PID_INCREASE_REQUESTED_PRESSURE[FR])
      &&REL_ROLL_ANGLE<REL_ROLL_DB)
           {
           temp=FR_Precharge_Press/(max(1,MAX
               _PRECHARGE_TIME-FR_Precharge_Timer);
           temp=min(2*TARGET_DUMP_RATE*LOOP_TIME,
               temp);
           temp=max(TARGET_DUMP_RATE*LOOP_TIME,
               temp);
           FL_Precharge_Press-=temp;
           }
      FR_Precharge_Press=max(0.0,FR_Precharge
          _Press);
      }
 else
      {
      FR-Precharge_Press=0.0;
      }
```

In step 228 the old values for next loop are updated.
SS_Lin_Rear_Z1=RearLnrSlipAngle;
REAR_LNR_LAT_VEL=CurrentRearLnrLatVel;
FRONT_LNR_LAT_VEL=CurrentFrontLnrLatVel;
REAR_LNR_LAT_ACC=FltRearLnrLatA;
Z1_STEERING_MHEEL_ANGLE=STEERING_WHEEL_ANGLE;

### PID CONTROLLER

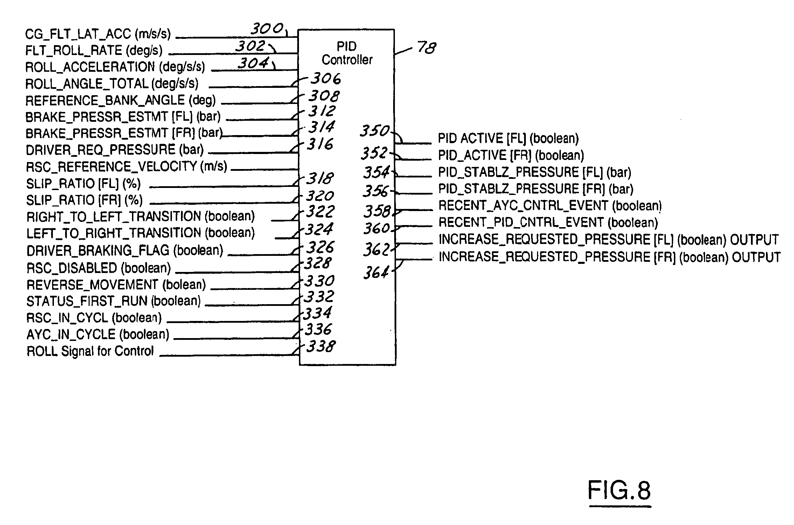

Referring now to Figure 8, the PID controller 78 calculates front control pressures; using some or all of Proportional, Integral, Derivative and Double Derivative feedback control logic, required to control excessive two wheel lift during non-tripped rolling motion. For short the controller is referred to as a PID controller even though all the functions may not be provided. The "I" integral and "DD" double derivative functions are the most likely not to be present. When this controller acts on a signal it is referred to as PID control even though all the functions may not be provided. The control pressure is applied to the outer front wheel when the vehicle is experiencing high lateral acceleration while turning and concurrently experiencing wheel lift on the inner side of the turn. PID intervention is based on the requested PID feedback pressure, as well as vehicle velocity and lateral acceleration exceeding specified thresholds; when the vehicle is moving in a forward direction. Intervention ends when PID pressure falls below a threshold reflective of stabilization of roll motion, or if driver is braking when PID pressure falls within an offset of driver pressure and slip of wheel being controlled indicates a level of stability appropriate for handoff to the anti-lock braking system.

Essentially, the PID controller 78 acts when more aggressive control is needed. The transition controller 76 acts before the vehicle is in an aggressive maneuver. This is typically below a threshold where the sensors are still in a linear region. Above the linear threshold, the PID takes over to aggressively control the vehicle. Aggressive control applies greater braking pressure to prevent the vehicle from rolling over.

In general, the Proportional, Integral, Derivative and Double Derivative, if present, terms are added together to form the total requested control pressure on each wheel. A brief explanation of each term follows.

The proportional term acts on a roll angle error input signal, thus the term proportional since the resulting requested control pressure will be proportional to the roll angle error magnitude by a factor *K_P.* A proportional peak hold strategy was added to mitigate a bouncing mode which can occur in certain aggressive maneuvers. The initiation of this strategy is contingent on the vehicle having experienced a recent divergence in roll rate magnitude.

The input to the derivative term is roll rate signal, which serves as a leading indicator of roll angle instability and thus provide an early lead on controlling the transient behavior of roll angle. The gain factor *K_D* multiplies the roll rate signal minus a deadband to generate a derivative pressure term. *KD* is an experimentally derived term. If *K_D* is unduly high, unnecessary control interventions may be caused (sensitive system) and the system made susceptible to input signal noise.

The double derivative term is used to capture the roll stability tendency of the vehicle. The roll acceleration signal will exhibit wide-ranging oscillations during control, so the gain factor *K_DD* 's influence on the overall PID stabilizing pressure should be set to a minimum.

The integral control pressure is used to drive the steady state roll angle error toward zero. A bounded version of the roll angle error signal is multiplied by a gain factor *K_I,* then integrated to provide a requested integrator pressure. The reason for bounding the input is to prevent integrator windup.

The PID controller 78 has various inputs. The inputs include a lateral acceleration at the center of gravity (CG_FLT_LAT_ACC (m/s/s) input 300, a filtered roll rate (FLT_ROLL_RATE (deg/s) input 302, a (ROLL_ACCELERATION (deg/s/s) input 304, (ROLL_ANGLE_TOTAL (deg) input 306, a (REFERENCE_BANK_ANGLE (deg) input 308, a front left brake pressure estimate (BRAKE_PRESSR_ESTMT [FL] (bar) input 312, a front right (BRAKE_PRESSR_ESTMT [FR] (bar) input 314, a driver requested pressure (DRIVER_REQ_PRESSURE (bar) 316, a (RSC_REFERENCE_VELOCITY (m/s) input 317, a (SLIP_RATIO [FL] (%) input 318, a (SLIP_RATIO [FR] (%) input 320, (RIGHT_TO_LEFT_TRANSITION (Boolean) input 322, (LEFT_TO_RIGHT_TRANSITION (Boolean) input 324, (DRIVER_BRAKING_FLAG (Boolean) input 326, a roll system disabled (RSC_DISABLED (Boolean) input 328, (REVERSE_MOVEMENT (Boolean) input 330, (STATUS_FIRST_RUN (Boolean) input 332, (RSC_IN_CYCLE (Boolean) input 334, (AYC_IN_CYCLE (Boolean) input 336 and a roll signal for control input 338.

The PID controller has various outputs including (PID_ACTIVE [FL] (Boolean) output 350, (PID_ACTIVE [FR] (Boolean) output 352, a stabilizer pressure (PID_STBLZ_PRESSURE [FL] (bar) output 354, (PID_STBLZ_PRESSURE [FR] (bar) output 356, (RECENT_AYC_CNTRL_EVENT (Boolean) output 358, (RECENT_PID_CNTRL_EVENT (Boolean) output 360, (INCREASE_REQUESTED_PRESSURE [FL] (Boolean) output 362, (INCREASE_REQUESTED_PRESSURE [FR] (Boolean) output 364.

The PID controller 78 includes the various calibratable parameters. The parameters are shown for his example. The parameters in implementation may be varied based on the vehicle configuration. Proportional dead band PROP_DB (linear interpolation function of vehicle speed): Absolute value of Proportional deadband above which the error signal input to the proportional controller becomes positive, thus yielding a positive requested proportional pressure. At nominal speeds, the value is chosen in the vicinity of the vehicle roll gradient experienced near 1 g of lateral acceleration.

| RSC REFERENCE VELOCITY (m/s) | PROP DB (deg) |
|---|---|
| 0 | 7.0 |
| 16.0 | 5.2 |
| 32.0 | 5.2 |
| 83.0 | 4.6 |

Another is proportional gain factor K_P_UP (linear interpolation function of vehicle speed): Proportional gain factor that multiplies the roll angle error signal when above PROP_DB, thus generating a positive proportional term of the requested PID stabilizing pressure.

| RSC REFERENCE VELOCITY (m/s) | K P UP (bar/deg) |
|---|---|
| 0 | 30.0 |
| 18.0 | 30.0 |
| 35.0 | 30.0 |
| 83.0 | 30.0 |

Proportional gain factor K_P_DOWN (linear interpolation function of vehicle speed): Proportional gain factor that multiplies the roll angle error signal when below PROP_DB, thus generating a negative proportional term of the requested PID stabilizing pressure.

| RSC REFERENCE VELOCITY (m/s) | K P DOWN (bar/deg) |
|---|---|
| 0 | 40.0 |
| 18.0 | 40.0 |
| 35.0 | 40.0 |
| 83.0 | 40.0 |

LARGE_ ROLL_RATE_THRESH (in this example a value of 30.0 deg/s is used): Roll rate magnitude above which recent large roll rate timer is set to the maximum value.

RECENT_LARGE_ROLL_RATE (0.5 sec): Time duration assigned to recent large roll rate timer when roll rate magnitude exceeds LARGE_ ROLL_RATE_THRESH.

PROP_HOLD_ANGLE_THRESHOLD (in this example a value of 1.48*Roll_gradient is used): Roll angle at which the proportional pressure starts tracking peak proportional pressure.

PROP_PEAK_HOLD_TIME (in this example a value of 0.5 sec is used): Time duration that the proportional peak hold pressure is latched once magnitude of roll signal for control falls below PROP_HOLD_ANGLE_THRESHOLD.

PROP_PEAK_RAMP_DOWN_RATE (in this example a value of 250 bar/s is used): Ramp down rate of prior proportional peak to a new lower prop peak pressure when roll signal for control still exceeds hold angle, or ramp down rate to upstream proportional pressure if roll signal for control has not exceeded hold angle within the last PROP_PEAK_HOLD_TIME seconds.

DERIV_DB (linear interpolation function of lateral acceleration): Absolute value of derivative deadband, used outside of PID control, above which the error signal input to the derivative controller becomes positive, thus yielding a positive requested derivative pressure. Values are chosen to prevent roll rate noise at low lateral acceleration levels from inducing nuisance PID interventions.

| CG FLT LAT ACC (m/s/s) | DERIV DB (deg/sec) |
|---|---|
| 0 | 5.0 |
| 4.0 | 5.0 |
| 7.0 | 0.0 |
| 100.0 | 0.0 |

DERIV_DB_DURING_PID_CONTROL (in this example a value of -20 deg/s is used). During PID intervention the deadband is set to a constant (non-lateral acceleration dependent) negative value, providing a phase advance on the PID pressure to mitigate roll oscillation during aggressive maneuvers.

K_D_UP (linear interpolation function of vehicle speed): Derivative gain factor that multiplies the roll rate error signal when roll rate is above DERIV_DB; generating a positive derivative term of the requested PID stabilizing pressure.

| RSC REFERENCE VELOCITY (m/s) | K D UP (bar/deg/s) |
|---|---|
| 0 | 1.0 |
| 18.0 | 1.0 |
| 35.0 | 1.0 |
| 83.0 | 1.0 |

K_D_DOWN (linear interpolation function of vehicle speed): Derivative gain factor that multiplies the roll rate error signal when roll rate is below DERIV_DB; generating a negative derivative term of the requested PID stabilizing pressure.

| RSC REFERENCE VELOCITY (m/s) | K D DOWN (bar/deg/s) |
|---|---|
| 0 | 0.2 |
| 18.0 | 0.2 |
| 35.0 | 0.2 |
| 83.0 | 0.2 |

K_DD_UP (in this example a value of 0. bar/deg/s/s is used): Double derivative gain factor that multiplies the roll acceleration signal when RSC intervention is active and roll acceleration sign matches that of the turn; generating a positive double derivative term of the requested PID stabilizing pressure.

K_DD_DOWN (in this example a value of 0 bar/deg/s/s is used): Double derivative gain factor that multiplies the roll acceleration signal when RSC intervention is not active or roll acceleration sign is opposite that of the turn; generating a nil double derivative term of the requested PID stabilizing pressure.

INTG_DB (linear interpolation function of vehicle speed): Absolute value of Integral deadband above which the error signal input to the Integral term becomes positive. At nominal speeds, value is chosen in the vicinity of the vehicle roll gradient experienced near 1 g of lateral acceleration.

| RSC REFERENCE VELOCITY (m/s) | INTG DB (deg) |
|---|---|
| 0 | 7.0 |
| 16.0 | 5.2 |
| 32.0 | 5.2 |
| 83.0 | 4.6 |

MAX_INTGRTR_ERROR (in this example a value of 5.0 deg is used): Absolute value of upper bound on the error signal input to the Integral controller. The purpose of this parameter is to prevent integrator windup.

MIN_INTGRTR_ERROR (in this example a value of 5.0 deg is used): Absolute value of lower bound on the error signal input to the Integral controller. The purpose of this parameter is to avoid integrator windup.

K_I (in this example a value of 10.0 bar/deg.s is used): Integral gain factor multiplying the bounded roll angle error signal times loop time, generating the integral term of the requested stabilizing pressure.

PRESSURE_INCREASE_DELTA_FOR_INFLECTION_ADJUST (in this example a value of 10 bar is used): The pressure delta that the pressure estimate has to increase by before the downward adjustment of the PID pressure, to an offset (PRESSURE_OFFSET_OURING_PID_RAMP_UP) from the pressure estimate, occurs.

PRESSURE_OFFSET_OURING_PID_RAMP_UP (in this example a value of 20 bar is used): Specifies the maximum delta between PID pressure and estimated pressure, once the inflection adjustment begins.

LMTD_RAMP_DOWN_RATE (in this example a value of -400 bar/s is used): Maximum decrease rate that the PID requested pressure is allowed to ramp down at.

MAX_PRESSURE_DECREASE_TO_ENTER_LMTD_RAMP_DOMN (in this example a value of -0.5 bar is used): Negative delta pressure of the underlying P+I+D+DD sum required to enter the limited PID ramp down mode.

MIN_PRESSURE_INCREASE_TO_STAY_IN_LMTD_RAMP_DOW N (in this example a value of 0.5 bar is used): Positive delta pressure of the underlying P+I+D+DD sum above which limited PID ramp down mode exits.

MAX_RAMP_DOWN_RATE (in this example a value of -300 bar/s is used): Ramp down rate used when opposite front wheel requests PID intervention concurrently as inside wheel is ramping down PID requested pressure.

ENTER_THRES (in this example a value of 30.0 bar is used): PID requested pressure threshold for either front wheel, above which the flag PID_ACTIVE is set. A true value for the aforementioned flag constitutes one of the necessary conditions for activating RSC.

LAT_ACC_ACTVTION_THRSHLD (in this example a value of 5.0 m/s/s is used): Absolute value of vehicle lateral acceleration threshold above which the variable LARGE_LAT_ACC_COUNTER is initialized to LAT_ACC_COUNTER_INIT. A nonzero value of this counter is a necessary condition for activating RSC.

LAT_ACC_COUNTER_INIT (in this example a value of 3.0 sec is used): Time duration assigned to LARGE_ LAT_ ACC_ COUNTER when vehicle lateral acceleration magnitude exceeds LARGE_ ROLL_RATE_THRESH.

EXIT_THRES (in this example a value of 10.0 bar is used): PID requested pressure threshold for either front wheel below which the flag PID_ACTIVE resets to false, thus exiting PID control.

WHEEL_STABLE_IN_SLIP (in this example a value of -15 % is ;used): Maximum slip ratio observed on PID controlled wheel before PID intervention can exit.

MIN_PID_PRES_FOR_FORCED_CONTROL_EXIT (in this example a value of 9 bar is used): PID pressure threshold below which PID intervention is forced to exit, in case wheel is allowed to lock for an extended period thus not allowing the WHEEL_STABLE_IN_SLIP criteria to be met.

RECENT_PID_EVNT_THRSHLD (in this example a value of 0.7 sec is used): Period of time during which the history of any PID intervention is logged.

RECENT_AYC_EVNT_THRSHLD (in this example a value of 0.7 sec is used): Period of time during which the history of any AYC intervention is logged.

PID_MINIMUM_ACTIVATION_SPEED (in this example a value of 7.0 m/s is used): Vehicle speed below which RSC system will not activate.

MAXIMUM_SPEED_TO_CONTINUE_PID (in this example a value of 5.0 m/s is used: If vehicle speed falls below this threshold during PID intervention, PID control exits.

MAXIMUM_STBLZ_PRESSURE (in this example a value of 255.0 bar is used).

LOOP_TIME_SEC: (in this example a value of 0.007 sec is used): Sampling time of input signals, as well as maximum allowable execution time of stability control system logic.

### Compute PID Desired Braking Pressures Logic

The description of the PID feedback controller for non-tripped roll events follows. An explanation of the calculation of each term is included, and a C-language implementation of the computation is also included.

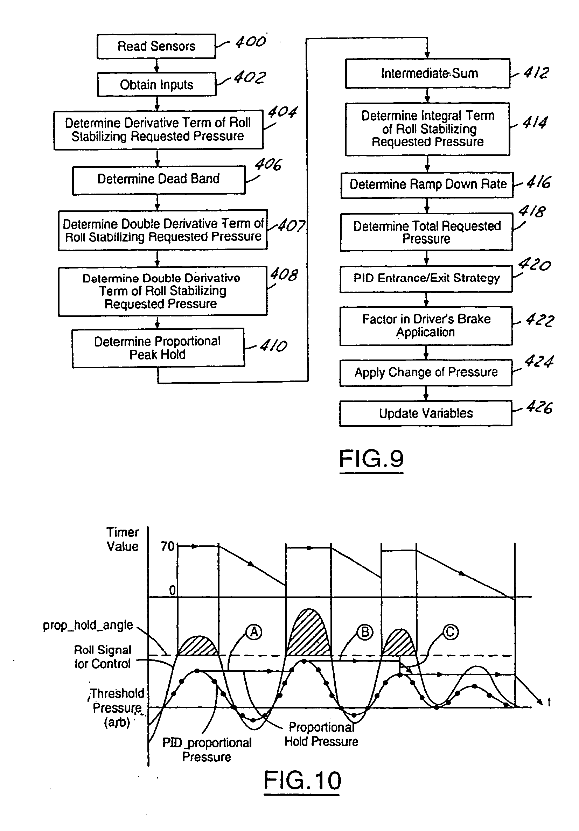

Referring now to Figure 9, a flowchart illustrating the operation of the PID controller 78 is illustrated. In step 400 the sensors of the system are read. In step 402 the various inputs described above are obtained.

In step 404 a derivative term of the roll stabilizing requested pressures for each front wheel is determined. During PID intervention or if a recent moderately aggressive transition maneuver (as indicated from the transition controller), the derivative deadband determined in step 406 is set to a constant negative threshold (DERIV_DB_DURING_PID_CONTROL) to provide for a prediction of normal load oscillations. Otherwise the derivative deadband (DERIV_DB) is a function of the vehicle's lateral acceleration, nearing zero as the lateral acceleration increases beyond 0.7 g's.

For left turns (positive roll angle), compute derivative pressure term for outer (right) front wheel.

```
  if (PID_ACTIVE[FR]||RIGHT_TO_LEFT_TRANSITION)
      derivative_db=DERIV_DB_DURING_PID_CONTROL;
  else
      derivative_db=DERIV_DB;

  if ((FLT_ROLL_RATE-derivative_db)>0)DrvtvPres
       [FR]=K_D_UP*(FLT_ROLL_RATE-derivative_db);
  else
      DrvtvPres[FR]=K_D_DOWN*(FLT_ROLL_RATE-
           Derivative_db);
```

For right turns (negative roll angle), compute derivative pressure term for outer (left) front wheel.

```
  if (PID_ACTIVE[FL]||LEFT_TO_RIGHT_TRANSITION)
      derivative_db=DERIV_DB_DURING_PID_CONTROL;
  else
      derivative_db=DERIV_DB;
  if ((FLT_ROLL_RATE+derivative_db)<0)DrvtvPres[FL]=
       (-1.0)*K_D_UP*(FLT_ROLL_RATE+derivative_db);
  else
      DrvtvPres[FL]=(-
  1.0)*K_D_DOWN*(FLT_ROLL_RATE+derivative_db);
```

In step 406, the double derivative term of the roll stabilizing requested pressures for each front wheel, based on roll acceleration signal is determined. This term is effective during RSC intervention, as K_DD_DOMN is set to zero.

For left turns (positive roll angle), the double derivative pressure term for outer (right) front wheel is determined.

```
  if ((ROLL_ACCELERATION>0)&&RSC_IN_CYCLE)DDPres[FR]
      =K_DD_UP*ROLL_ACCELERATION;
  else
      DDPres[FR]=K_DD_DOWN*ROLL_ACCELERATION;
```

For right turns (negative roll angle), compute derivative pressure term for outer (left) front wheel.

```
  if ((ROLL_ACCELERATION<0)&&RSC_IN_CYCLE)DDPres[FL]
      =(-1.0)*K_DD_UP*ROLL_ACCELERATION;
  else
      DDPres[FL]=(-1.0)*K_DD_DOWN*ROLL_ACCELERATION;
```

In step 408 a proportional term of the roll stabilizing requested pressures for each front wheel is determined. A roll signal for control is determined based on the vehicle angle. In the present example the ROLL_SIG_ FOR_CONTROL is based on the difference between ROLL_ANGLE_TOTAL and REFERENCE_BANK_ANGLE as set forth in:
ROLL_SIG_FOR_CONTROL=ROLL_ANGLE_TOTAL-REFERENCE _BANK_ANGLE;

The proportional term is based on roll angle error signal formed by subtracting a deadband, of value PROP_DB, from the input control signal ROLL_SIG_FOR_CONTROL. This error signal is then multiplied by the proportional gain factor K_P to obtain the proportional pressure term.

For left turns (positive roll angle), compute proportional pressure term for outer (right) front wheel.

```
  if ((ROLL_SIG_FOR_CONTROL-PROP_DB)>0)PropPres[FR]
       =(ROLL_SIG_FOR_CONTROL-PROP_DB)*K_P_UP;
  else
       PropPres[FR]=(ROLL_SIG_FOR_CONTROL-PROP_DB)
           *K_P_DONN;
```

A history of recent large positive roll rate is kept. The history is used as a screening criteria for initiating proportional peak hold logic described thereafter. RECENT_LARGE_PSTV_ROLL_RATE_TIMER is used to keep track of this criteria.

```
       if (FLT_ROLL_RATE>LARGE_ROLL_RATE_THRESH)
       {
                RECENT_LARGE_PSTV_ROLL_RATE TIMER=
                     RECENT_LARGE_ROLL_RATE;
      }
      else if (RECENT_LARGE_PSTV_ROLL_RATE_TIMER>0)
      {
      RECENT_LARGE_PSTV_ROLL_RATE_TIMER--;
      }
      if (RECENT_LARGE_PSTV_ROLL_RATE TIMER>0)RECENT
          _LARGE_PSTV_ROLL_RATE=TRUE;
      else
          RECENT_LARGE_PSTV_ROLL_RATE=FALSE;
```

Proportional peak hold logic: When a large positive roll divergence starts building, as indicated by roll signal for control exceeding PROP_HOLD_ANGLE_THRESHOLD and corroborated by the existence of a recent large positive roll rate, a constant base level of PID pressure to achieve a consistent level of deep slip on the wheel is maintained. This helps mitigate vehicle bounce during aggressive maneuvers. The constant base level is obtained by holding the peak value of the proportional term until the next proportional peak that exceeds the threshold, or until a timer (PROP_PEAK_HOLD_TIMER[FR]) runs out.

Figure 10 depicts the intended proportional peak hold strategy. In region A the proportional signal is held. In region B, because the new proportional peak pressure is increasing, the proportional hold pressure is allowed to track to a new peak. In region C the proportional pressure decreases, so the hold pressure is ramped down. In Region D the hold pressure continues to ramp down since the proportional pressure continues to decrease. It should be noted that the proportional peak hold value is held at least until the timer is reset. The countdown timer is maintained at its peak value until the roll signal for control drops below the proportional hold angle threshold.

This is set forth in the following logic:

```
  if ((ROLL_SIG_FOR_CONTROL>PROP_HOLD_ANGLE
      _THRESHOLD)
      &&(RECENT_LARGE_PSTV_ROLL_RATE|| (PROP_PEAK
           _HOLD_TIMER[FR]>0)))
  { //roll angle exceeds threshold AND recent large
 positive roll rate was seen or have already entered
 prop peak hold mode, //enter/keep in prop peak hold
 mode
  if (PROP_PEAK_HOLD_TIMER[FR] ==0)
  { //first divergent oscillation indicated
      by a null prop hold timer
  INITIAL_DIVERGENT_OSCILLATION[FR]=TRUE;
  }
  if (INITIAL_DIVERGENT_OSCILLATION[FR])
  { //prop hold logic for first divergent
      oscillation
      PROP_PEAK_HOLD_TIMER[FR]=PROP_HOLD_LOOPS;
      //set timer to max value during divergence
      if (PropPres[FR]>=REFERENCE_PROP_PEAK_HOLD
           [FR])
      { //PropPres is still rising, let PeakHold
               track it
           REFERENCE_PROP_PEAK_HOLD[FR]=PropPres
                [FR];
                PROP_PEAK_HOLD[FR]=FALSE;
  }
 else
  { //PropPres is no longer rising, assign latched
      PeakHold to PropPres
      PropPres[FR]=REFERENCE_PROP_PEAK_HOLD[FR];
      PROP_PEAK_HOLD[FR]=TRUE;
      }
  }
 else //prop hold logic for subsequent divergent
      oscillations
  {
      PROP_PEAK_HOLD_TIMER[FR]=PROP_HOLD_LOOPS;//set
           timer to max value during
           divergence//Logic to handle transitions
           to a higher or lower subsequent
           proportional peak roll signal
           if (PropPres[FR]>NEW_PROP_PEAK_HOLD[FR])
       { //Prop Pres is still rising, assign a
           NewPeakHold to track it
           NEW_PROP_PEAK_HOLD[FR]=PropPres[FR];
           TRACKING_NEXT_PEAK[FR]=TRUE;//flag
           indicating NewPeakHold is in tracking
           mode RAMP_DOWN_TO_NEW_PROP_PEAK[FR]
           =FALSE; //reset ramp down once tracking
           peak starts
       }
       else
       { //PropPres is no longer rising, reset
           tracking flag
           TRACKING_NEXT_PEAK[FR]=FALSE;
       }
       //Logic to handle transition from Reference
       PeakHold to NewPeakHold
       if
  ((PropPres[FR]>REFERENCE_PROP_PEAK_HOLD[FR])&&
      TRACKING_NEXT_PEAK[FR])
  { //allow PropPres increase above prior PeakHold
       during tracking mode
           PROP_PEAK_HOLD[FR]=FALSE;
  }
  else if ((PropPres[FR]>REFERENCE_PROP_PEAK_HOLD
       [FR])&&!TRACKING_NEXT_PEAK[FR])
  { //NewPeakHold is latched and is > prior
       PeakHold, so REFERENCE_PROP_PEAK_HOLD[FR]=NEW
      _PROP_PEAK_HOLO[FR];//assign NewPeakHold
  //to PeakHold, and
           PropPres[FR]=REFERENCE_PROP_PEAK_HOLD[FR]
           //assign latched NewPeakHold to PropPres
           RAMP_DOWN_TO_NEW_PROP_PEAK[FR]=FALSE;
           //since ramp up to NewPeakHold occurred,
           //ramp down is not active
           PROP_PEAK_HOLD[FR]=TRUE;
       }
      else if ((PropPres[FR]<REFERENCE_PROP_PEAK
           _HOLD[FR]))
       {
      if (!TRACKING_NEXT_PEAK[FR]
           &&(REFERENCE_PROP_PEAK_HOLD[FR]>NEW_PROP
                _PEAK_HOLD[FR]))
       { //NewPeakHold is latched and is<prior
           PeakHold, REFERENCE_PROP_PEAK_HOLD[FR]
           -=PROP_PEAK_RAMP_DOWN_RATE*LOOP_TIME_SEC;
           //ramp down prior PeakHold toNewPeak
          Hold, RAMP_DOWN_TO_NEW_PROP_PEAK[FR]=TRUE;
      //indicate ramp down is in effect
          if (REFERENCE_PROP_PEAK_HOLD[FR]<NEW
          _PROP_PEAK_HOLD[FR])
 { //ramp down of prior PeakHold brings it
      to NewPeakHold level, // assign NewPeak
      Hold to PeakHold, and REFERENCE_PROP_PEAK
      _HOLD[FR]=NEW_PROP_PEAK_HOLD[FR];
      RAMP_DOWN_TO_NEW_PROP_PEAK[FR]=FALSE;
      //indicate end of ramp down//of PeakHold
      towards NewPeakHold
      }
  }
 PropPres[FR]=REFERENCE_PROP_PEAK_HOLD[FR];//assign
 PeakHold to PropPresPROP_PEAK_HOLD[FR]=TRUE;
           }
      }
  }
 else
  { //roll angle is <=threshold, so decrement
      timer and assign PropPres to PeakHold if
      (PROP_PEAK_HOLD_TIMER[FR]>1)
  { //PropHold timer is>1, therefore hold
           PropPres INITIAL_DIVERGENT
          _OSCILLATION[FR]=FALSE; //first divergent
           oscillation of prop peak hold mode has
           ended PROP_PEAK_HOLD_TIMER[FR]--;
           //decrement PropHold timer
           if (RAMP_DOWN_TO_NEW_PROP_PEAK[FR])
  { //ramp down of prior PeakHold to NewPeakHold
      is not completed, continue till done
           REFERENCE_PROP_PEAK_HOLD[FR]-PROP_PEAK
               _RAMP_DOWN_RATE*LOOP_TIME_SEC;
  { //ramp down prior PeakHold to NewPeakHold
           if (REFERENCE_PROP_PEAK_HOLD[FR]<NEW
               _PROP_PEAK_HOLD[FR])
           { //ramp down of prior PeakHold brings
               it to NewPeakHold level,
               //assign NewPeakHold to PeakHold
               REFERENCE_PROP_PEAK_HOLD[FR]=NEW
               _PROP_PEAK_HOLD[FR];
               RAMP_DOWN_TO_NEW_PROP_PEAK[FR]
               =FALSE;//indicate end of ramp down
               of
      //PeakHold towards NewPeakHold
                         }
           }
          else
           { //ramp down from old to new PeakHold
          has ended or was not in effect, so reset
          NewPeakHold state
               NEW_PROP_PEAK_HOLD[FR]=0;
      }
      if (PropPres[FR]<REFERENCE_PROP_PEAK_HOLD[FR])
      { //overwrite decreasing PropPres with
      PeakHold during peak hold mode
           PropPres[FR]=REFERENCE_PROP_PEAK_HOLD
                [FR];
           PROP_PEAK_HOLD[FR]=TRUE;
      }
      else
      { //PropPres is higher than PeakHold, allow
           PropPres increase above PeakHold by
           PROP_PEAK_HOLD[FR]=FALSE; //exiting prop
          hold mode and keeping upstream PropPres
      }
 }
 else //PropHold timer<=1, ramp out of prop PeakHold
      if it existed //otherwise upstream PropPres
      value is kept unchanged
 {
      if (PROP_PEAK_HOLD_TIMER[FR]==1)
      { //prop hold mode was in effect, set flag
      indicating ramp down of PeakHold to PropPres
           RAMP_DOWN_PROP_HOLD_TO_PROP_PRES[FR]
          =TRUE;
      PROP_PEAK_HOLD_TIMER[FR] =0;
      }
      if (RAMP_DOWN_PROP_HOLD_TO_PROP_PRES[FR])
 { //ramp down of PeakHold to PropPres
      if (REFERENCE_PROP_PEAK_HOLD[FR]>(PropPres[FR]
           +PROP_PEAK_RAMP_DOWN_RATE*LOOP_TIME_SEC))
      {
           REFERENCE_PROP_PEAK_HOLD[FR]-=PROP_PEAK
               _RAMP_DOWN_RATE*LOOP_TIME_SEC;//ramp
               down prior PeakHold to NewPeakHold
               PropPres[FR]=REFERENCE_PROP_PEAK
               _HOLD[FR];
      }
      else //PeakHold reached upstream PropPres, end
      ramp down and exit prop hold logic
       {
           REFERENCE_PROP_PEAK_HOLD[FR]=0;
           RAMP_DOWN_PROP_HOLD_TO_PROP_PRES[FR]
                =FALSE;
       }
  }
  else //ramp down of PeakHold to PropPres has ended,
  or
  { //roll angle never exceeded threshold,
  therefore REFERENCE_PROP_PEAK_HOLD[FR]=0;//reset
  reference prop peak pressure
  }
  NEW_PROP_PEAK_HOLD[FR]=0;
  PROP_PEAK_HOLD[FR]=FALSE;
  RAMP_DOWN_TO_NEW_PROP_PEAK[FR]=FALSE;
     }
  }
```

For right turns (negative roll angle), compute proportional pressure term for outer (left) front wheel by:

```
  if ((ROLL_SIG_FOR_CONTROL+PROP_DB)<0)
      PropPres[FL]=(-1.0)*(ROLL_SIG_FOR_CONTROL+PROP
      _DB)*K_P_UP;
  else
      PropPres[FL]=(-1.0)*(ROLL_SIG_FOR_CONTROL+PROP
           _DB)*K_P_DOMN;
```

Keep history of recent large negative roll rate, which is used as a screening criteria for initiating proportional peak hold logic thereafter. RECENT_LARGE_NGTV_ROLL_RATE_TIMER is used to keep track of this criteria.

```
  if (FLT_ROLL_RATE<(-1*LARGE_ROLL_RATE_THRESH))
  {
           RECENT_LARGE_NGTV_ROLL_RATE_TIMER=RECENT
                _LARGE_ROLL_RATE;
  }
  else if (RECENT_LARGE_NGTV_ROLL_RATE_TIMER>0)
  {
           RECENT_LARGE_NGTV_ROLL_RATE_TIMER--;
  }
  if (RECENT_LARGE_NGTV_ROLL_RATE TIMER>0)RECENT
      _LARGE_NGTV_ROLL_RATE=TRUE;
  else
      RECENT_LARGE_NGTV_ROLL_RATE=FALSE;
```

When a large negative roll divergence starts building, as indicated by roll signal for control exceeding PROP_HOLD_ANGLE_THRESHOLD and corroborated by the existence of a recent large negative roll rate, this strategy serves to keep a constant base level of PID pressure to achieve a consistent level of deep slip on the wheel and thus help mitigate vehicle bounce during aggressive maneuvers. The constant base level is obtained by holding the peak value of the proportional term until the next proportional peak that exceeds the threshold, or until PROP_PEAK_HOLD_TIMER[FL] runs out.

```
  if ((ROLL_SIG_FOR_CONTROL<(-1.0*PROP_HOLD_ANGLE
      _THRESHOLD))
      &&(RECENT_LARGE_NGTV_ROLL_RATE||(PROP_PEAK
      _HOLD_TIMER[FL]>0))
  }
  { //roll angle exceeds threshold AND recent
 large negative roll rate was seen or have already
 entered prop peak hold mode,
 //enter/keep in prop peak hold mode
 if (PROP_PEAK_HOLD_TIMER[FL]==0)
  { //first divergent oscillation indicated
           by a null prop hold timer
           INITIAL_DIVERGENT_OSCILLATION[FL]=TRUE;
  }
 if (INITIAL_DIVERGENT_OSCILLATION[FL])
  { //prop hold logic for first divergent
           oscillation
           PROP_PEAK_HOLD_TIMER [FL] =PROP_HOLD_LOOPS;
           //set timer to max value during
          divergence
      if (PropPres[FL]>=REFERENCE_PROP_PEAK_HOLD
           [FL])
      { //PropPres is still rising, let PeakHold
           track it
           REFERENCE_PROP_PEAK_HOLD[FL]=PropPres
           [FL];
           PROP_PEAK_HOLD[FL]=FALSE;
      }
      else
  { //PropPres is no longer rising, assign
           latched PeakHold to PropPres
           PropPres[FL]=REFERENCE_PROP_PEAK_HOLD
                [FL];
           PROP_PEAK_HOLD[FL]=TRUE;
      }
  }
  else //prop hold logic for subsequent
           divergent oscillations
  {
      PROP_PEAK_HOLD_TIMER[FL]=PROP_HOLD_LOOPS;
      //set timer to max value during divergence
           //Logic to handle transitions to a higher
      or lower subsequent proportional peak roll
      signal
           if (PropPres[FL]>NEW_PROP_PEAK_HOLD[FL])
      { //PropPres is still rising, assign a
           NewPeakHold to track it
           NEW_PROP_PEAK_HOLD[FL]=PropPres[FL];
           TRACKING_NEXT_PEAK[FL]=TRUE;//flag
           indicating NewPeakHold is in tracking
           mode
           RAMP_DOWN_TO_NEW_PROP_PEAK[FL]=FALSE;
           //reset ramp down once tracking peak
           starts
  }
 else
  { //PropPres is no longer rising, reset tracking
      flag
      TRACKING_NEXT_PEAK[FL]=FALSE;
  }
  //Logic to handle transition from ReferencePeakHold
 to NewPeakHold
      if
  ((PropPres[FL]>REFERENCE_PROP_PEAK_HOLD[FL])
      &&TRACKING_NEXT_PEAK[FL])
 { //allow PropPres increase above prior PeakHold
      during tracking modePROP_PEAK_HOLD[FL]=FALSE;
  }
 else if ((PropPres[FL]>REFERENCE_PROP_PEAK
      _HOLD[FL])&&!TRACKING_NEXT_PEAK[FL])
 { //NewPeakHold is latched and is>prior
      PeakHold, so REFERENCE_PROP_PEAK_HOLD[FL]=NEW
 _PROP_PEAK_HOLD[FL];
 //assign NewPeakHold
 //to PeakHold, and PropPres [FL]
 =REFERENCE_PROP_PEAK_HOLD[FL];
 //assign latched NewPeakHold to PropPres
      RAMP_DOWN_TO_NEW_PROP_PEAK[FL] =FALSE;
 //since ramp up to NewPeakHold occurred,
 // ramp down is not active PROP_PEAK_HOLD
  [FL]=TRUE;
 }
 else if ((PropPres[FL]<REFERENCE_PROP_PEAK_HOLD
      [FL]))
 {
 if (!TRACKING_NEXT_PEAK[FL]&&(REFERENCE_PROP
      _PEAK_HOLD[FL]>NEW_PROP_PEAK_HOLD[FL]))
 { //NewPeakHold is latched and is<prior
 PeakHold, REFERENCE_PROP_PEAK_HOLD[FL]-=PROP_PEAK
      _RAMP_DOWN_RATE*LOOP_TIME_SEC;
 //ramp down prior PeakHold to
 NewPeakHold, RAMP_DOWN_TO_NEW_PROP_PEAK[FL]=TRUE;
 //indicate ramp down is in effect
 if (REFERENCE_PROP_PEAK_HOLD[FL]<NEW_PROP_PEAK
      _HOLD[FL])
 { //ramp down of prior PeakHold brings it to
 NewPeakHold level, //assign NewPeakHold to
 PeakHold, and REFERENCE_PROP_PEAK_HOLD[FL]=NEW
 _PROP_PEAK_HOLD[FL];
 RAMP_DOWN_TO_NEW_PROP_PEAK[FL]=FALSE; //indicate
 end of ramp down
 // of PeakHold towards NewPeakHold
 }
 }
 PropPres[FL]=REFERENCE_PROP_PEAK_HOLD[FL];
      //assign PeakHold to PropPres
      PROP_PEAK_HOLD[FL]=TRUE;
 }
 }
  }
  else
  { //roll angle is<=threshold, so decrement timer
  and assign PropPres to PeakHold
  if (PROP_PEAK_HOLD_TIMER[FL]>1)
  { //PropHold timer is > 1, therefore hold
  PropPres
  INITIAL_DIVERGENT_OSCILLATION[FL]=FALSE;
  //first divergent oscillation of prop peak hold
 mode has ended PROP_PEAK_HOLD_TIMER[FL]--;
  //decrement PropHold timer
  if (RAMP_DOWN_TO_NEW_PROP_PEAK[FL])
  { //ramp down of prior PeakHold to NewPeakHold
  is not completed, continue till done
      REFERENCE_PROP_PEAK_HOLD[FL]-=PROP
 _PEAK_RAMP_DOWN_RATE*LOOP_TIME_SEC;
  // ramp down prior PeakHold to NewPeakHold
  if (REFERENCE_PROP_PEAK_HOLD[FL]<NEW_PROP
 _PEAK_HOLD[FL])
  { //ramp down of prior PeakHold brings it to
 NewPeakHold level,
      //assign NewPeakHold to PeakHoldREFERENCE
 _PROP_PEAK_HOLD[FL]=NEW_PROP_PEAK_HOLD[FL];
 RAMP_DOWN_TO_NEW_PROP_PEAK[FL]=FALSE; //indicate
 end of ramp down of //PeakHold towards NewPeakHold
  }
  }
 else
      { //ramp down from old to new PeakHold has
           ended or was not in effect, so reset New
           PeakHold stateNEW_PROP_PEAK_HOLD
  [FL]=0;
  }
  if (PropPres[FL]<REFERENCE_PROP_PEAK_HOLD[FL])
  { //overwrite decreasing PropPres with PeakHold
 during peak hold mode PropPres[FL]=REFERENCE_PROP
 _PEAK_HOLD[FL];PROP_PEAK_HOLD[FL]=TRUE;
 }
 else
      { //PropPres is higher than PeakHold, allow
      PropPres increase above PeakHold by
      PROP_PEAK_HOLD[FL]= FALSE;
 //exiting prop hold mode and keeping upstream
 PropPres
 }
 }
 else //PropHold timer<=1, ramp out of prop PeakHold
 if it existed
 //otherwise upstream PropPres value is kept
 unchanged
 {
 if (PROP_PEAK_HOLD_TIMER[FL]==1)
 { //prop hold mode was in effect, set flag
 indicating ramp down of PeakHold to PropPres
 RAMP_DOWN_PROP_HOLD_TO_PROP_PRES[FL]=TRUE;
 PROP_PEAK_HOLD_TIMER[FL]=0;
 }
 if (RAMP_DOWN_PROP_HOLD_TO_PROP_PRES[FL])
 { //ramp down of PeakHold to PropPres
 if (REFERENCE_PROP_PEAK_HOLD[FL]>(PropPres[FL]
      +PROP_PEAK_RAMP_DOWN_RATE*LOOP_TIME_SEC))
 {
          REFERENCE_PROP_PEAK_HOLD[FL]-=PROP
               _PEAK_RAMP_DOWN_RATE*LOOP_TIME_SEC;
 //ramp down prior PeakHold to NewPeakHoldPropPres
      [FL]=REFERENCE_PROP_PEAK_HOLD[FL];
 }
 else //PeakHold reached upstream PropPres, end
 ramp down and exit prop hold logic
 {
 REFERENCE_PROP_PEAK_HOLD[FL]=0;
 RAMP_DOWN_PROP_HOLD_TO_PROP_PRES[FL]=FALSE;
 }
 }
 else //ramp down of PeakHold to PropPres has ended,
 or
 { //roll angle never exceeded threshold,
 therefore REFERENCE_PROP_PEAK_HOLD[FL]=0;
      //reset reference prop peak pressure
 }
      NEW_PROP_PEAK_HOLD[FL]=0;
      PROP_PEAK_HOLD[FL]=FALSE;
      RAMP_DOWN_TO_NEW_PROP_PEAK[FL]=FALSE;
 }
 }
```

Referring back to Figure 9, in step 412 an intermediate sum of the P, D and DD pressures for front left and front right wheels may be obtained as follows:

```
  //Calculate current loop's value of P_D_DD sum for
       front right wheel P_D_DD_Sum [FR]=PropPres[FR]
      +DrvtvPres[FR]+DDPres[FR];

  //Calculate current loop's value of P_D_DD sum for
       front left wheel P_D_DD_Sum [FL]=PropPres[FL]
      +DrvtvPres[FL]+DDPres[FL];
```

In step 414 an integral term of the roll stabilizing requested pressures for each front wheel is determined. A deadband, of value INTG _DB, is subtracted from ROLL_SIG_FOR_CONTROL to form the input error signal to the integral pressure term.

For the integral term, special precaution has to be taken regarding integral windup. Integrator windup is a condition that occurs when the input error signal remains large; which in turn causes the integrator term to grow (wind up) to very large values. Even after the roll angle falls within the target deadband, the integrator term takes an excessively long time to unwind; thus continuing to needlessly command control pressure. In order to avoid this situation, the following steps are applied: Impose an upper and lower bound on the input error signal [ROLL_SIG_FOR_CONTROL - INTG _DB], defined by MAX_INTGRTR_ERROR and MIN_INTGRTR_ERROR respectively. This limits the error term that gets added (integrated) each execution loop and compute an integral pressure term based on this bound input error signal.

For left turns (positive roll angle), the integral pressure term for outer (right) front wheel is determined by:

```
  //Compute raw value of Integral error for right
  wheel IntegralError[FR]=ROLL_SIG_FOR_CONTROL
  -INTG_DB;

  //Put bounds on min and max values of the integral
  error, to prevent integrator windup IntegralError
  [FR]=LIMIT (IntegralError[FR], ((-1)*MIN_INTGRTR
  _ERROR), MAX_INTGRTR_ERROR);

  //Compute cumulative Integrator term IntegPres[FR]
  =INTGRAL_PRESSR[FR]+(IntegralError[FR]*K_I*LOOP
 _TIME_SEC);

  INTGRAL_PRESSR[FR]=IntegPres[FR];

  //Limit integral term to be as negative as the P,
  D, DD sum is positive, so as not to delay //a fast
  ramping positive P+D+DD pressure

  if ((INTGRAL_PRESSR[FR]<0)&&(P_D_DD_Sum[FR]>0)
  &&(INTGRAL_PRESSR[FR]<(-P_D_DD_Sum[FR])))
      INTGRAL_PRESSR[FR]=-P_D_DD_Sum[FR];

  //If both integral pressure and PD sum are
      negative, zero out the integral pressure term

  //so as not to delay total req. pressure from
      ramping up when the PD sum does become
      positive

  else if ((INTGRAL_PRESSR[FR]<0)&&(P_D_DD_Sum
      [FR]<0))INTGRAL PRESSR[FR]=0;
```

For right turns (negative roll angle), the integral pressure term for outer (left) front wheel is determined by:

```
  //Compute raw value of Integral error for right
      wheel IntegralError[FL]-ROLL_SIG_FOR_CONTROL
      +INTG_DB;
 
 //Put bounds on min and max values of the integral
      error, to prevent integrator windup Integral
      Error[FL]=LIMIT(IntegralError[FL], ((-1)*MAX
      _INTGRTR_ERROR), MIN_INTGRTR_ERROR);

 //Compute cumulative Integrator term IntegPres[FL]
      =INTGRAL_PRESSR[FL]-(IntegralError[FR]
      *K_I*LOOP_TIME_SEC);

 INTGRAL_PRESSR[FL]=IntegPres[FL];

 // Limit integral term to be as negative as the P,
 D, DD sum is positive, so as not to delay

 // a fast ramping positive P+D+DD pressure

 if ((INTGRAL_PRESSR[FL]<0)&&(P_D_DD_Sum
  [FL]>0)&&(INTGRAL_PRESSR[FL]<(-P_D_DD_Sum
  [FL]))) INTGRAL_PRESSR[FL]=-P_D_DD
 Sum[FL];

 //If both integral pressure and PD sum are
 negative, zero out the integral pressure term //so
 as not to delay total req. pressure from ramping up
 when the PD sum does become positive

 else if ((INTGRAL_PRESSR[FL]<0)&&(P_D_DD_Sum[FL]
      <0))INTGRAL_PRESSR[FL]=0;
```

In step 416 the ramp down rate of PID requested pressure while PID intervention is active is limited. The hydraulic control unit can release pressure faster than it can build it. So to provide for a more uniform PID pressure request, the ramp down rate of PID pressure is limited to the symmetrical value of the hydraulics build rate. This helps keep a consistent level of slip on the control wheel which in turn reduces possible roll oscillations. This is performed by the following logic:

```
 for (WheelIndex=FL; WheelIndex<=FR; WheelIndex++)
  {
 //Calculate upstream unlimited delta pressure
 request Raw_DeltaP[MheelIndex]=INTGRAL_PRESSR
  [WheelIndex]+P_D_DD_Sum[WheelIndex]-Z1_PID_DD_SUM
  [WheelIndex];
 //Conditions for entering and keeping in ramp down
      limit logic if (PID_ACTIVE[WheelIndex]&&(((Raw
      _DeltaP[WheelIndex]<MAX_PRESSURE_DECREASE_TO
      _ENTER_LMTD_RAMP_DOWN)&&!LIMITED_RAMP_DOWN
      _RATE_MODE[WheelIndex])
  II((Raw_DeltaP[WheelIndex]<MIN_PRESSURE_INCREASE_TO
      _STAY_IN_LMTD_RAMP_DOWN)&&LIMITED_RAMP_DOWN
      _RATE_MODE[WheelIndex])))
 {
 //Set limited ramp down rate mode to true LIMITED
      _RAMP_DOWN_RATE_MODE[WheelIndex] =TRUE;
 LmtdRampDownRate=LMTD_RAMP_DOWN_RATE;
 //If opposite front wheel starts requesting PID
 pressure, override ramp down rate by mirror value
 of max
 //hydraulics build rate if (PID_ACTIVE[CROSS_AXLE
      _WHEEL(WheelIndex)])
  {
 LmtdRampDownRate=MAX_RAMP_DOWN_RATE;
  }
 //calculate delta pressure decrease term for
 current loop, by capping lower limit to
 LmtdRampDownRate
 //Given that the delta will be negative, take the
 maximum of it and the ramp down rate limitLmtd
 _DeltaP_For_RmpDwn[WheelIndex]==max(Raw_DeltaP
  [WheelIndex], LmtdRampDownRate);
  }
 else //Limited ramp down rate mode was not entered
  {
      //Set limited ramp down rate mode to false
 state
      LIMITED_RAMP_DOWN_RATE_MODE [WheelIndex]=FALSE;
  }
  }
```

In step 418 the total PID requested pressure of the current loop is determined according to the following four modes:

```
 for (WheelIndex=FL; WheelIndex<=FR; WheelIndex++)
  {
      //Save P,I,D,DD sum for next loopZ1_PID_D
          _SUM[WheelIndex]=P_D_DD_Sum[WheelIndex]
           +INTGRAL_PRESSR[WheelIndex];

  (1) If in ramp down mode, decrement by limited ramp
 down delta if (LIMITED_RAMP_DOWN_RATE_MODE
  [WheelIndex])
 {
      PIDStblzPres[WheelIndex]=PID_STBLZ_PRES[Wheel
 Index]+Lmtd_DeltaP_For_RmpDwn[WheelIndex];
 }

  (2) If total increasing PID pressure is positive
 and PID control is active, limit pressure increase
 delta to take into account actuator drive limits.
 The limit becomes effective once pressure estimate
 increases by PRESSURE_INCREASE_DELTA_FOR_INFLECTION
 _ADJUST from initial pressure estimate value upon
 activation, then will remain in effect as long as
 pressure estimate remains above the exit threshold
  (EXIT_THRES)

 else if (PID_ACTIVE [WheelIndex]
      &&((P_D_DD_Sum[WheelIndex]+INTGRAL_PRESSR
      [WheelIndex])>0)
      &&((((BRAKE_PRESSR_ESTMT[WheelIndex]-PRES
      _EST_UPON_PID_INCREASE[WheelIndex])>
      PRESSURE_INCREASE_DELTA_FOR_INFLECTION_ADJUST)
      &&(!INITIAL_ADJUST_HAS_OCCURRED[WheelIndex]))
  II((BRAKE_PRESSR_ESTMT[WheelIndex]>EXIT_THRES)
      &&(INITIAL_ADJUST_HAS_OCCURRED[WheelIndex])))
      )
 {
 if ((PID_STBLZ_PRES[WheelIndex]+Raw_DeltaP[Wheel
      Index]-BRAKE_PRESSR_ESTMT[WheelIndex])
      >PRESSURE_OFFSET_DURING_PID_RAMP_UP)
 {
      PIDStblzPres[WheelIndex]=BRAKE_PRESSR_ESTMT
           [WheelIndex]+ PRESSURE_OFFSET_DURING_PID
          _RAMP_UP;
 }
 else
 {
      PIDStblzPres[WheelIndex]=PID_STBLZ_PRES[Wheel
      Index]+Raw_DeltaP[WheelIndex];
  }
      //Logic for detecting initial adjustment of
      req. pressure towards pressure estimate during
      ramp up phase
      if (!INITIAL_ADJUST_TO_PRES_ESTMT [WheelIndex]
      &&!INITIAL_ADJUST_HAS_OCCURRED[WheelIndex])
      {
           INITIAL_ADJUST_TO_PRES_ESTMT [WheelIndex]
           =TRUE;
           INITIAL_ADJUST_HAS_OCCURRED[WheelIndex]
           =TRUE;
      }
      //Set INITIAL_ADJUST_TO_PRES_ESTMT flag for
      only one loop's duration per activation cycle
           else
               INITIAL_ADJUST_TO_PRES_ESTMT [Wheel
               Index]=FALSE;
  }

  (3)If total increasing PID pressure is positive and
 PID control is active, but pressure estimate has
 not yet increased over the activation pressure
 estimate by PRESSURE_INCREASE_DELTA_FOR_INFLECTION
 _ADJUST, assign total PID pressure to prior total
 plus the upstream unlimited delta pressure
 increase.

 else if (PID_ACTIVE [WheelIndex]&&((P_D_DD_Sum
  [Wheellndex]+INTGRAL_PRESSR[WheelIndex])>0))
 {
      PIDStblzPres[WheelIndex]=PID_STBLZ_PRES[Wheel
      Index]+Raw_DeltaP[Wheellndex];
 }
  (4)If PID control is active but underlying P,I,D,DD
 pressure sum is negative, OR PID is not active, the
 total PID pressure is assigned to the underlying
 P,I,D,DD pressure sum.

 else
      PIDStblzPres[WheelIndex]=P_D_DD_Sum[Wheel
      Index]+INTGRAL-PRESSR[WheelIndex];

      PIDStblzPres[WheelIndex]=LIMIT(PIDStblzPres
      [WheelIndex], 0, MAXIMUM_STBLZ_PRESSURE);

 } /*End for loop*/
```

The PID control entrance and exit strategy is performed in step 420. A history of vehicle lateral acceleration exceeding a given large threshold is kept to be used as a screening criteria for PID activation is performed.

```
  if (ABS(CG_FLT_LAT_ACC)>LAT_ACC_ACTVTION_THRSHLD)
      LARGE_LAT_ACC_COUNTER=LAT_ACC_COUNTER_INIT;

 else if (LARGE_LAT_ACC_COUNTER>0)
      LARGE_LAT_ACC_COUNTER--;
```

PID control is enabled in the following.

```
 if ((LARGE_LAT_ACC_COUNTER>0)
      // Large lat acc or recent history of large
      lat acc
      &&((REF_VELOCITY_YC>PID_MINIMUM_ACTIVATION
      _SPEED)||
           ((PID_ACTIVE [FL]||PID_ACTIVE[FR])&&
           (REF_VELOCITY_YC>MAXIMUM_SPEED_TO
           _CONTINUE_PID))
      )
      &&(!RSC_DISABLED) //RSC system is enabled,
      no shutdowns exist
      &&(!REVERSE_MOVEMENT) //Allow activation
      only going forward
      &&(!STATUS_FIRST_RUN) //Allow activation
      only after first run becomes false
 )
      EnablePIDControl=TRUE;
 else
      EnablePIDControl=FALSE;
```

Activating/deactivating individual wheel PID control, figuring in Driver Brake Apply is determined in step 422. This is set forth in the following code:

```
 for (WheelIndex=FL; WheelIndex<=FR; WheelIndex++)
 {
      if (PID_ACTIVE [WheelIndex])
      { //PID control already active on wheel,
      check for existence of de-activation
      conditions
      if (!EnablePIDControl||
               //Enforce exit when PID pressure
               goes below 9 bar(PIDStblzPres
               [WheelIndex]<=MIN_PID_PRES_FOR
               _FORCED_CONTROL_EXIT)||
               //Once PID control pressure gets
               within ~10 bar of driver pressure
               AND ((PIDStblzPres[WheelIndex]
               <(DRIVER_REQ_PRESSURE+EXIT_THRES))
               && //PID control pressure is less
               than or equal to wheel pressure
               estimate (in case pressure build
               //is in a slow build mode and thus
               not reflecting driver pressure) AND
               */(PIDStblzPres[WheelIndex]<=(BRAKE
               _PRESSR_ESTMT[WheelIndex]))&&
               //wheel slip ratio is greater than~
               -15% to indicate appropriateness for
               ABShandoff */(SLIP_RATIO[MheelIndex]
               >=WHEEL_STABLE_IN_SLIP)))
 {
      PID_ACTIVE[WheelIndex]=FALSE;
      INTGRAL_PRESSR[MheelIndex]=0; //Reset key
 state variables
      PRES_EST_UPON_PID_INCREASE[WheelIndex]=0;
      REFERENCE_PROP_PEAK_HOLD[WheelIndex]=0;
      PROP_PEAK_HOLD_TIMER[WheelIndex]=0;
      RAMP_DOWN_PROP_HOLD_TO_PROP_PRES[WheelIndex]
      =FALSE;
```

If driver is braking upon PID exit, a flag is set to desensitize PID re-entry

```
 if (DRIVER_BRAKING_FLAG)
      EXIT_PID_DURING_DRIVER_BRAK[WheelIndex]=TRUE;
 else
      EXIT_PID_DURING_DRIVER_BRAK[WheelIndex]=FALSE;
 }
 } //End PID_ACTIVE==TRUE
 else //PID control not active on wheel, check
 if conditions exist for activation
      {
      //reset initial PID pressure adjust (toward
      pressure estimate) flag for next PID
      activation
      INITIAL_ADJUST_HAS_OCCURRED[WheelIndex]=FALSE;
      //Keep forcing prop peak hold exit until PID
      reactivation by resetting key state variables
      PROP_PEAK_HOLD_TIMER[WheelIndex]=0;
      REFERENCE_PROP_PEAK_HOLD[WheelIndex]=0;
      RAMP_DOWN_PROP_HOLD_TO_PROP_PRES[WheelIndex]
      =FALSE;
      //If driver is no longer braking, allow PID
      entry at entrance threshold
      if (!DRIVER_BRAKING_FLAG)
      {
           EXIT_PID_DURING_DRIVER_BRAK[WheelIndex]
           =FALSE;
      }
      if ((//If driver is no longer braking OR
      driver is braking but PID intervention had not
      //been called for yet, allow PID entry at
      entrance threshold
      ((PIDStblzPres[WheelIndex]>=ENTER_THRES)&&
      (!EXIT_PID_DURING_DRIVER_BRAK[WheelIndex]))
      //If PID recently exit due to driver braking
      and driver is still braking, allow PID
      intervention once
      //PID pressure exceeds pressure estimate plus
      a threshold, to provide for hysteresis
      ||(EXIT_PID_DURING_DRIVER_BRAK[WheelIndex]&&
      (PIDStblzPres[WheelIndex]>=ENTER_THRES)
           &&(PIDStblzPres[WheelIndex]>=(BRAKE
          _PRESSR_ESTMT[WheelIndex]+EXIT_THRES))
      //Can also enter at lower threshold if had
      recent PID event and driver is not braking
      ||((PIDStblzPres[WheelIndex]>=EXIT_THRES)&&REC
      ENT_PID_CTRL&&(!DRIVER_BRAKING_FLAG))
      )&&EnablePIDControl
      }
 {
      PID_ACTIVE[WheelIndex]=TRUE;
      //Latch pressure estimate at PID activation,
      for use in PID pressure adjustment toward
      estimate during ramp up phase
           PRES_EST_UPON_PID_INCREASE[WheelIndex]
      =BRAKE_PRESSR_ESTMT[WheelIndex];
      //If driver is braking, include the minimum of
      driver pressure or pressure estimate into the
      PID pressure state
          PIDStblzPres[WheelIndex]+=min(DRIVER_REQ
      _PRESSURE, BRAKE_PRESSR_ESTMT[MheelIndex]);
      //Put an upper and lower bound on the final
      PID requested pressure value
           PIDStblzPres[WheelIndex]=LIMIT(PIDStblz
      Pres[WheelIndex], 0, MAXIMUM_STBLZ_PRESSURE);
       }
  }
```

The PID pressure is then applied to the brake system to prevent the vehicle from rolling over. The change in the current loop's delta requested pressure is also determined.

```
      DeltaPIDStblzPres[WheelIndex]=PIDStblzPres
  [WheelIndex]-PID_STBLZ_PRES[WheelIndex];

           //Update INCREASE_REQUESTED_PRESSURE flag
  based on previous loop's delta pressure value

           if ((DELTA_PID_STBLZ_PRES[WheelIndex]>=0)
               //Do not set flag when req pressure
           is less than enter threshold value
               &&(PIDStblzPres[WheelIndex]>ENTER
               _THRES)
           )
               INCREASE_REQUESTED_PRESSURE[Wheel
               Index]=TRUE;
           else
               INCREASE_REQUESTED_PRESSURE[Wheel
           Index]=FALSE;
```

Global variables with local versions are updated in step 426.

```
  PID_STBLZ_PRES[WheelIndex]=PIDStblzPres[Wheel
  Index];

  DELTA_PID_STBLZ_PRES[WheelIndex]=DeltaPIDStblzPres
  [WheelIndex];
  } /*End for loop*/
```

PID requested pressure if corresponding flag is false is set to zero in the following:

```
 if (!PID_ACTIVE[FL])PID_STBLZ_PRES[FL]=0;

 if (!PID_ACTIVE[FR])PID_STBLZ_PRES[FR]=0;
```

A history of when the last PID control is kept in the following:

```
 if (PID_ACTIVE [FL]||PID_ACTIVE[FR])RECENT_PID_EVNT
     _CNTR=RECENT_PID_EVNT_THRSHLD;

 else if (RECENT_PID_EVNT_CNTR>0)RECENT_PID_EVNT
     CNTR--;

 if (RECENT_PID_EVNT_CNTR>0)RECENT_PID_CNTRL_EVENT
     =TRUE;
 else
     RECENT_PID_CNTRL_EVENT=FALSE;
```

A history of when last in Active Yaw Control is also kept in the following:

```
 if
 (AYC_IN_CYCLE)RECENT_AYC_EVNT_CNTR=RECENT_AYC_EVNT
     THRSHLD;

 else if (RECENT_AYC_EVNT_CNTR>0)RECENT_AYC_EVNT
     CNTR--;

 if (RECENT_AYC_EVNT_CNTR>0)RECENT_AYC_CNTRL_EVENT
     =TRUE;

 else
     RECENT_AYC_CNTRL_EVENT=FALSE;
```

While the invention has been described in connection with one or more embodiments, it should be understood that the invention is not limited to those embodiments. On the contrary, the invention is intended to cover all alternatives, modifications, and equivalents, as may be included within the scope of the appended claims.

## Claims

1. A system for controlling a safety system of an automotive vehicle comprising:
a first controller (76) generating a first pressure control signal in response to a roll rate signal;
a second controller (78) generating a second pressure control signal in response to a roll angle signal;
an arbitration module (80) coupled to the first controller (76) and the second controller (78), said arbitration module choosing the higher of the first pressure control signal and the second pressure control signal to determine a final pressure control signal; and
the safety system (38) coupled to the arbitration module (80), said safety system (38) operated corresponding to the final pressure control signal.

2. A system as recited in claim 1 wherein the first controller (76) comprises a transition controller.

3. A system as recited in claim 1 wherein the second controller (78) comprises a proportional-derivative controller.

4. A system as recited in claim 1 wherein the second controller (78) comprises a proportional-integral derivative controller.

5. A system as recited in claim 1 wherein the second controller (78) comprises a proportional-integral-derivative-double derivative controller.

6. A system as recited in claim 1 wherein the first signal and the second control signal comprise pressure request signals.

7. A system as recited in claim 1 wherein the safety system (38) comprises a rollover control system.

8. A system as recited in claim 1 wherein the second pressure control signal includes a component dependent upon roll acceleration.

9. A system as recited in claim 8 wherein the second pressure control signal is generated in response to a roll acceleration signal and a deadband.

10. A system as recited in claim 1 wherein the roll rate is a filtered roll rate (96).

## Patentansprüche

1. Ein System zur Steuerung eines Sicherheitssystems für ein Kraftfahrzeug, bestehend aus:
einem ersten Regler (76), der ein erstes Drucksteuersignal als Reaktion auf ein Wankgeschwindigkeitssignal erzeugt;
einem zweiten Regler (78), der ein zweites Drucksteuersignal als Reaktion auf ein Wankwinkelsignal erzeugt;
einem Entscheidungsmodul (80), das mit dem ersten Regler (76) und dem zweiten Regler (78) verbunden ist, wobei das Entscheidungsmodul das höhere des ersten Drucksteuersignals und des zweiten Drucksteuersignals wählt, um ein endgültiges Drucksteuersignal zu bestimmen; und
dem Sicherheitssystem (38), verbunden mit dem Entscheidungsmodul (80), wobei das Sicherheitssystem (38) entsprechend dem endgültigen Drucksteuersignal betrieben wird.

2. Ein System, wie in Anspruch 1 wiedergegeben, worin der erste Regler (76) einen Übergangsregler beinhaltet.

3. Ein System, wie in Anspruch 1 wiedergegeben, worin der zweite Regler (78) einen Proportional-Differential-Regler beinhaltet.

4. Ein System, wie in Anspruch 1 wiedergegeben, worin der zweite Regler (78) einen Proportional-Integral-Differential-Regler beinhaltet.

5. Ein System, wie in Anspruch 1 wiedergegeben, worin der zweite Regler (78) einen Proportional-Integral-Differential-Doppel-Differential-Regler beinhaltet.

6. Ein System, wie in Anspruch 1 wiedergegeben, worin das erste Signal und das zweite Steuersignal Druckanforderungssignale beinhalten.

7. Ein System, wie in Anspruch 1 wiedergegeben, worin das Sicherheitssystem (38) ein Überschlag-Kontrollsystem beinhaltet.

8. Ein System, wie in Anspruch 1 wiedergegeben, worin das zweite Drucksteuersystem eine Komponente abhängig von der Wankbeschleunigung beinhaltet.

9. Ein System, wie in Anspruch 8 wiedergegeben, worin das zweite Drucksteuersignal als Reaktion auf ein Wankbeschleunigungssignal und eine Totzeit erzeugt wird.

10. Ein System, wie in Anspruch 1 wiedergegeben, worin es sich bei der Wankgeschwindigkeit um eine gefilterte Wankgeschwindigkeit (96) handelt.

## Revendications

1. Système destiné au contrôle d'un système de sécurité d'un véhicule automobile comprenant :
un premier contrôleur (76) générant un premier signal de commande de pression en réponse à un signal de vitesse de roulis ;
un deuxième contrôleur (78) générant un deuxième signal de commande de pression en réponse au signal d'angle de roulis;
un module d'arbitrage (80) couplé au premier contrôleur (76) et au deuxième contrôleur (78), ledit module d'arbitrage choisissant le plus élevé du premier signal de commande de pression et du deuxième signal de commande de pression pour déterminer un signal de commande de pression final; et
le système de sécurité (38) couplé au module d'arbitrage (80), ledit système de sécurité (38) fonctionnant en fonction du signal de commande de pression final.

2. Système selon le procédé de la revendication 1, dans lequel le premier contrôleur (76) comprend un contrôleur de transition.

3. Système selon le procédé de la revendication 1, dans lequel le deuxième contrôleur (78) comprend un contrôleur proportionnel-dérivé.

4. Système selon le procédé de la revendication 1, dans lequel le deuxième contrôleur (78) comprend un contrôleur proportionnel-intégral-dérivé.

5. Système selon le procédé de la revendication 1, dans lequel le deuxième contrôleur (78) comprend un contrôleur dérivé double proportionnel-intégral-dérivé.

6. Système selon le procédé de la revendication 1, dans lequel le premier signal et le deuxième signal de commande comprend des signaux de demande de pression.

7. Système selon le procédé de la revendication 1, dans lequel le système de sécurité (38) comprend un système de commande de roulis.

8. Système selon le procédé de la revendication 1, dans lequel le deuxième signal de commande de pression comprend un composant dépendant de l'accélération du roulis.

9. Système selon le procédé de la revendication 8, dans lequel le deuxième signal de commande de pression est généré en réponse à un signal d'accélération de roulis et à une bande inactive.

10. Système selon le procédé de la revendication 1, dans lequel la vitesse de roulis est une vitesse de roulis filtrée (96).
